Europäisches Patentamt

European Patent Office

Office européen des brevets

(11) Publication number: **0 137 314 B1**

# EUROPEAN PATENT SPECIFICATION

(45) Date of publication of patent specification: **13.05.92**    (51) Int. Cl.⁵: **H04N 7/13**

(21) Application number: **84110641.2**

(22) Date of filing: **06.09.84**

Divisional application 91108385.5 filed on 06/09/84.

(54) **Vector quantizer for picture information.**

(30) Priority: **06.09.83 JP 163617/83**
**09.01.84 JP 1669/84**
**18.01.84 JP 6473/84**
**30.01.84 JP 14606/84**
**30.01.84 JP 14607/84**
**02.02.84 JP 17281/84**
**23.02.84 JP 32918/84**
**15.03.84 JP 49901/84**

(43) Date of publication of application:
**17.04.85 Bulletin 85/16**

(45) Publication of the grant of the patent:
**13.05.92 Bulletin 92/20**

(84) Designated Contracting States:
**DE FR GB NL**

(56) References cited:
**EP-A- 0 097 858**
**GB-A- 2 003 001**
**US-A- 4 125 861**
**US-A- 4 375 650**

(73) Proprietor: **MITSUBISHI DENKI KABUSHIKI KAISHA**
**2-3, Marunouchi 2-chome Chiyoda-ku Tokyo 100(JP)**

(72) Inventor: **Murakami, Tokumichi c/o MITSUBISHI DENKI K.K.**
**Inf. Systems and Electronics Development Lab.**
**325, Kamimachiya Kamakura-shi Kanagawa(JP)**
Inventor: **Asai, Kohtaro c/o MITSUBISHI DENKI K.K.**
**Inf. Systems and Electronics Development Lab.**
**325, Kamimachiya Kamakura-shi Kanagawa(JP)**
Inventor: **Ito, Atsushi c/o MITSUBISHI DENKI K.K.**
**Inf. Systems and Electronics Development Lab.**
**325, Kamimachiya Kamakura-shi Kanagawa(JP)**

(74) Representative: **Eisenführ, Speiser & Strasse**
**Martinistrasse 24**
**W-2800 Bremen 1(DE)**

IEEE, Transactions on Communications, volume COM/28, No. 1, January 1980, page 84

B:H: Juang, A.H. Grey, "Multiple stage vector quantisation for speech coding", Proc. Intl. Conf. on A.S.S.P., pp 597-600, Paris (1982)

Patent Abstracts of Japan, unexamined applications, E field, vol. 8, no. 123, June 8, 1984 THE PATENT OFFICE JAPANESE GOVERNMENT page 60 E 249

## Description

## BACKGROUND OF THE INVENTION

Field of the Invention

The present invention relates to a vector quantizer for quantizing the vector of image information and audio information.

Description of the Prior Art

The prior art relating to such a vector quantizer is described in literatures such as: Y. Linde, A. Buzo and R.M. Gray, "An Algorithm for Vector Quantizer", IEEE Trans., Com-28, pp. 84 - 95 (1980); A. Gersho, "On the Structure of Vector Quantizers", IEEE Trans., IT-82, pp. 157 - 166 (1982); A. Buzo and A.H. Gray, Jr, "Speech Coding Based Upon Vector Quantization", IEEE Trans., ASSP-28 (1980); B.H. Juang and A.H. Gray, Jr., "Multiple Stage Quantization for Speech Coding", Proc. Intl. Conf. on A.S.S.P., pp. 597 - 600, Paris (1982); and A. Gersho and V. Cuperman, "Vector Quantization: A Pattern Matching Technique for Speech Coding", IEEE, COMMUNICATION MAGAZINE, pp. 15 - 21, Dec. (1983).

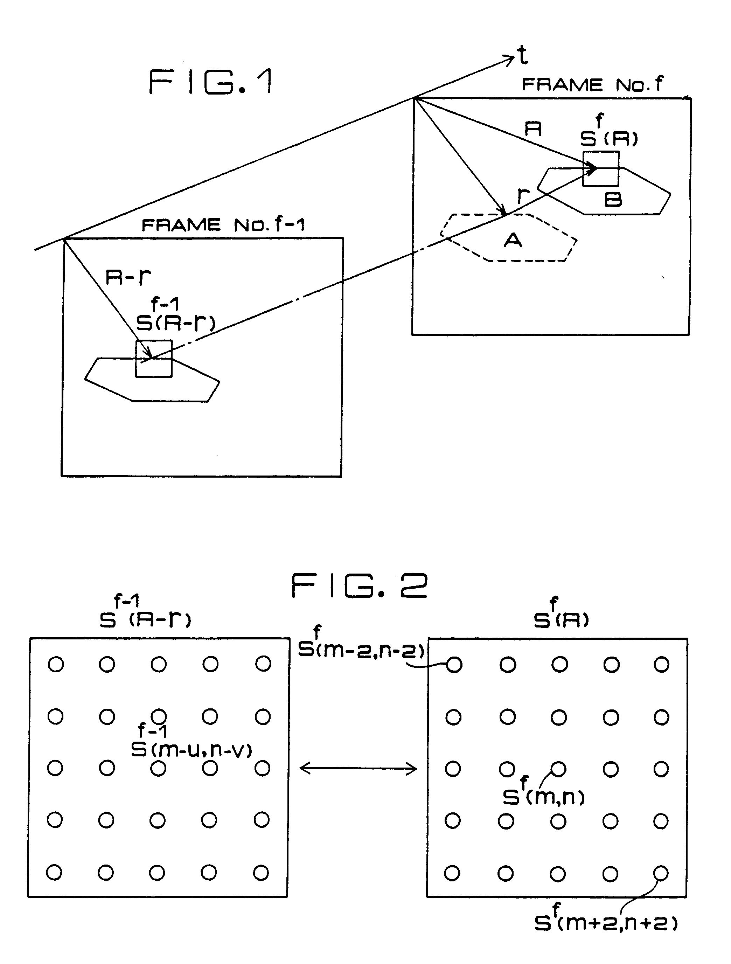

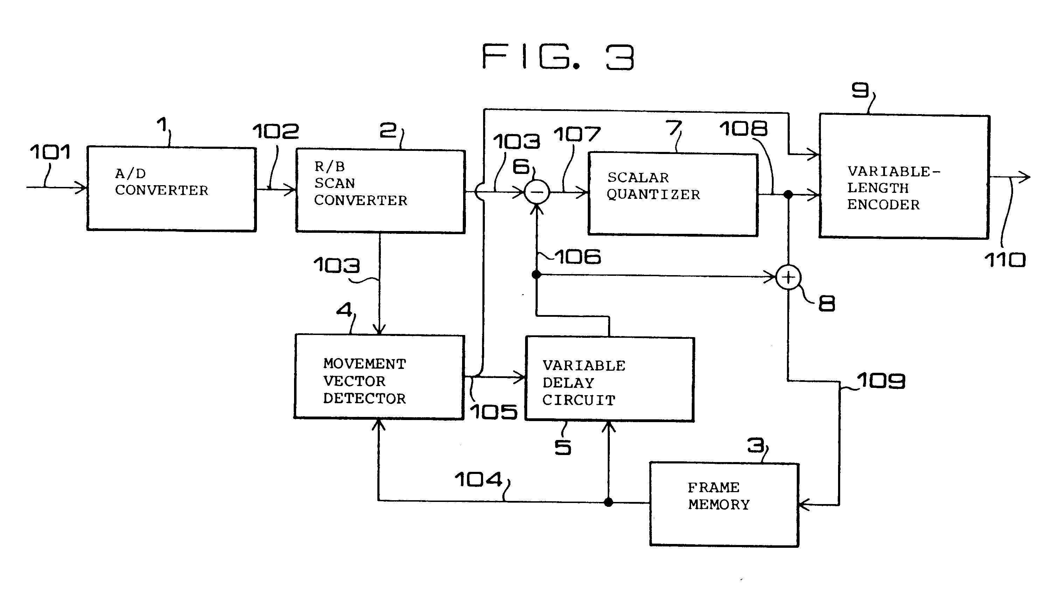

A vector quantizer as shown in Fig. 3, which will be described later, has already been proposed in addition to those vector quantizers of the prior art. The principle of the vector quantizer will be described prior to the description of the vector quantizer of Fig. 3. Referring to Fig. 1, assuming that an object has moved on the screen during the period from a frame No. f-1 to a frame No. f from a position A to a position B, then a block $S^f(R)$ including a plurality of the lattice samples of an image signal around a position vector R in the frame No. f becomes approximately equal to the block $S^{f-1}(R-r)$ of the image signal at a position determined by subtracting a movement vector r from a position vector R in the frame No. f-1. This is expressed as $S^f(R) \fallingdotseq S^{f-1}(R-r)$ where the position vector R = (m, n) and the movement vector r = (u, v) are shown in Fig. 2. Suppose the image signal at R = (m, n) is S(M, n) and $S^f(R)$ = [S(m-2, n-2), ..., S(m, n), ..., S(m+2, n+2)], the deviation L(u, v) between $S^f(R)$ and $S^{f-1}(R-r)$ is defined as the block unit matching scale of 5x5 picture element as follows;

$$L(u, v) = \sum_g \sum_h \left| S^f(m+g, n+h) - S^{f-1}(m+g-u, n+h-v) \right|$$

In this state, the movement vector r is expressed by

$$r = [u, v \mid \min_{u,v} L(u, v)]$$

That is, the deviation L(u, v) of $S^f(R)$ and $S^{f-1}(R-r)$ is expected to be minimized by block matching. Therefore, in case of introducing movement compensation into inter-frame prediction coding, if the block which minimizes L(u, v), extracted from image signal blocks of the frame No. f-1 is given as a prediction signal, the value of prediction error signal will be reduced to the least and encoding efficiency is improved.

Referring to Fig. 3 showing an example of the structure of a proposed experimental vector quantizer of this kind, there are shown an A/D converter 1, a raster/block scan converter 2, a frame memory 3, a movement vector detector 4, a variable delay circuit 5, a subtractor 6, a scalar quantizer 7, an adder 8 and a variable-length encoder 9.

The manner of operation of this vector quantizer will be described hereinafter. First the A/D converter 1 converts an analog picture input signal 101 into the corresponding digital signal and gives a digital picture signal sequence 102 for raster scanning. The serial digital picture signal sequence 102 is converted by the raster/block scan converter 2, and thereby the digital picture signal sequence is converted into a block scan picture input signal 103 arranged sequentially block by block (a raster scan is adopted within each block) from the top to the bottom and from the left to the right on the screen. A reproduced picture signal 104 of one frame before regenerated according to inter-frame DPCM loop is read from the frame memory 3. The movement vector detector 4 executes a picture signal block matching operation between the present block scan picture input signal 103 and the reproduced picture signal 104 of one frame before, and outputs the picture signal and gives the movement vector r = (u, v), i.e. signal 105 of the picture signal 104 of one frame before which minimizes the distortion. The movement vector (u, v) corresponds to the horizontal and the vertical shifts of the picture element of the block of the reproduced picture signal 105 of one frame before. On the basis of the movement vector 104, the variable delay circuit 5 block-shifts the one-frame preceding reproduced picture signal 104 by the movement vector and gives a predictive picture signal 106 which is the closest to the present block scan picture input signal 103. The subtractor 6 calculates the difference between the block scan picture input signal 103 and the predictive picture signal 106 (derived from a preceding frame) and gives a predictive error picture signal 107 to the scalar quantizer 7. The scalar quantizer 7 converts the predictive error picture signal 106 into a predictive error quantization picture signal 108 reduced in the number of quantization levels at picture element unit. The adder 8 adds the predictive error quantization picture signal 108 and the predictive picture signal 106 and gives a reproduced picture signal 109 including scalar quantization error to the frame memory 3. The frame memory performs delaying operation to delay the present reproduced picture signal 109 by one frame. In the movement compensation interframe DPCM loop, supposing that the picture input signal 103 is $S^f(m, n)$, the predictive picture signal 106 is $P^f(m, n)$, the predictive error signal 107 is $\epsilon^f(m, n)$, scalar quantization noise is $Q_s^f(m, n)$, the predictive error quantization signal 108 is $\hat{S}^f(m, n)$ and the one-frame preceding reproduced picture signal 104 is $\hat{S}^{f-1}(m, n)$, then

$$\epsilon^f(m, n) = S^f(m, n) - P^f(m, n),$$

$$\hat{\epsilon}^f(m, n) = \epsilon^f(m, n) + Q_s^f(m, n),$$

$$\hat{S}^f(m, n) = P^f(m, n) + \hat{\epsilon}^f(m, n) = S^f(m, n)$$
$$+ Q_s^f(m, n), \text{ and}$$

$$\hat{S}^{f-1}(m, n) = \hat{S}^f(m, n) \cdot Z^{-f}.$$

where $Z^{-f}$ denotes delay corresponding to one frame.

$P^f(m, n)$ is expressed through movement compensation on the basis of $\hat{S}^{f-1}(m, n)$ by the following formula:

$$P^f(m, n) = \hat{S}^{f-1}(m-u, n-v).$$

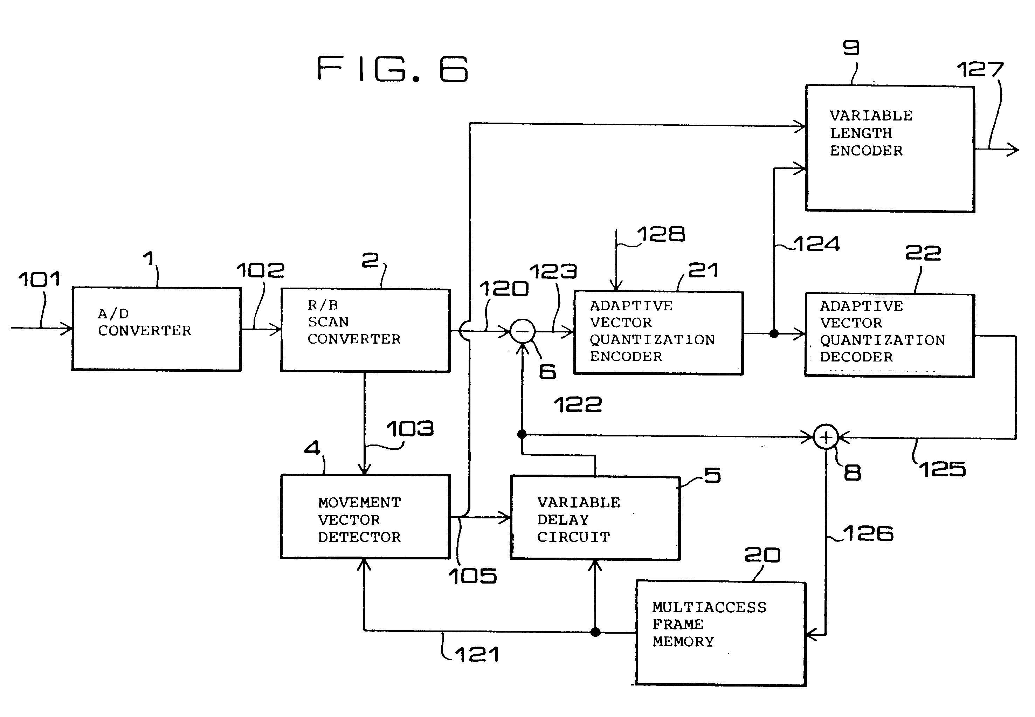

Fig. 5 shows an example of the structure of the movement vector detector 4 for carrying out movement compensation.

Referring to Fig. 5, there are shown a deviation computation circuit 10, a movement region line memory 11, a line memory control circuit 12, a deviation comparator 13 and a movement vector latch 14.

The movement vector detector 4 gives $S^f(R)$ produced by blocking a plurality of the sequences of the present picture input signal 103 to the deviation computation circuit 10. At this moment, the lines of the one-frame preceding reproduced picture signal 104 stored in the frame memory 3 corresponding to the tracking range of the movement region of $S^f(R)$ are stored in the movement region line memory 11. The line memory control circuit 12 sends sequentially the blocks adjacent to a plurality of blocks $S^{f-1}(R+r)$ of the one-frame preceding reproduced image signal 104 to the deviation computation circuit 10. The deviation computation circuit 10 computes the deviation $L(u, v)$ of the blocks in the neighborhood of $S^f(R)$ and $S^{f-1}(R-r)$ and the deviation comparator 13 determines the minimum deviation min $L(u, v)$. Since u and v corresponds to the horizontal u,v and the vertical address shifts of blocks in the movement region line memory 11 respectively, the deviation comparator 13 gives a movement detection strobing signal 111 to the movement vector latch 14 when the deviation is minimized, to take in a movement vector address 112. The movement vector latch 14 sends the displacement r of $S^{f-1}(R-r)$ relative to $S^f(R)$ minimizing the deviation $L(u, v)$ as the movement vector 105 to the variable delay circuit 5 and the variable-length encoder 9 of Fig. 3.

The variable-length encoder 9 of Fig. 3 processes the movement vector 105 and the predictive error quantization signal 108 through variable-length encoding to reduce the amount of information of the picture signal. The variable-length encoding enables the transmission of the movement compensation inter-frame encoding output 110 at a low bit rate.

In the conventional movement compensation inter-frame encoder as described hereinbefore, the movement compensation operation is performed for every block and the inter-frame DPCM operation is performed for every picture element. Accordingly, it is impossible to discriminate between a minute variation of the picture and noise, and the variable-length encoding of the movement vector and the predictive error quantization signal is difficult. Furthermore, since the control of the variation of the quantity of produced information depending on the movement scalar is difficult, a large loss is inevitable when transmission is carried out through a transmission channel of a fixed transmission capacity. Still further, encoding the predictive error quantization signal for every picture element is inefficient. Since the movement compensation system is liable to be affected by transmission channel error, the frame memory needs to be reset or repeated transmission when transmission channel error occurs, which requires long resetting time.

## SUMMARY OF THE INVENTION

An object of the present invention is to provide a vector quantizer capable of efficiently encoding a compensation predictive error signal at a reduced bit rate by performing adaptive vector quantization after judging the significance of the compensation predictive error signal in blocks, and capable of movement compensation inter-frame vector encoding in which variable-length encoding of movement vector is facilitated and information production control is achieved easily.

Further object of the present invention is to provide a vector quantizer capable of preventing the accumulation of vector quantization errors by inserting a low pass filter in the output of a frame memory and changing over the mode to vector-quantize the blocks themselves of a picture signal sequence instead of the blocks of a predictive error signal when the correlation between successive framed is very low, and capable of restricting the sudden increase of vector quantization error even when the frame changes greatly.

## BRIEF DESCRIPTION OF THE DRAWINGS

Figure 1 is an explanatory pictorial view for facilitating the understanding of the definition of the movement of picture signals between frames by a movement vector;

Figure 2 is an explanatory view showing the relation between the movement vector and the arrangement of the picture elements of a moved block;

Figure 3 is a block diagram showing a proposed experimental movement compensation inter-frame encoder;

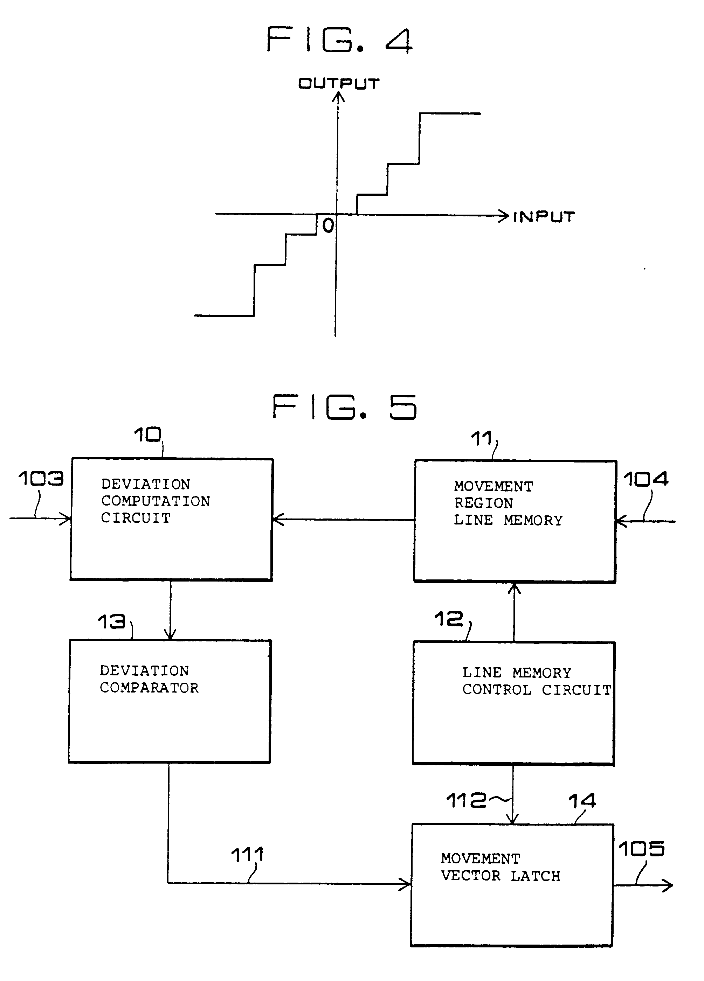

Figure 4 is a graph showing the input-output characteristics of the scalar quantizer employed in the encoder of Fig. 3;

Figure 5 is a block diagram of the movement vector detector employed in the encoder of Fig. 3;

Figure 6 is a block diagram showing the structure of a vector encoder, in a preferred embodiment, according to the present invention;

Figure 7 is a block diagram showing the structure of the adaptive vector quantization encoder employed in the encoder of Fig. 6;

Figure 8 is a block diagram showing the structure of the adaptive vector quantization decoder employed in the encoder of Fig. 6;

Figure 9 is an explanatory representation showing a predictive error picture signal, namely, an adaptive vector quantization input signal, in the encoder of Fig. 6;

Figure 10 is a graph explaining the relation between the input vector and the output vector in vector quantization;

Figure 11 is a view explaining the time relation between movement compensation and vector quantization process on a scene;

Figure 12 is a block diagram showing the structure of the encoder of an inter-frame vector encoder for explaining the basic principle of another embodiment of the present invention;

Figure 13 is a block diagram showing the structure of the vector quantization encoder of Fig. 12;

Figure 14 is a block diagram showing the structure of the vector quantization decoder of Fig. 12;

Figure 15 is a block diagram showing the structure of the decoder of an inter-frame vector encoder;

Figure 16 is a view explaining the mode of picture signal sequence blocking;

Figure 17 is a block diagram of an encoder of an inter-frame vector encoder, in other embodiment, according to the present invention;

Figure 18 is a block diagram showing the structure of a movement detection vector quantization encoder of Fig. 17;

Figure 19 is a block diagram showing the structure of the vector quantization decoder of Fig. 17; and

Figure 20 is a block diagram showing an exemplary embodiment of the decoder of the inter-frame vector encoder according to the present invention.

## DESCRIPTION OF THE PREFERRED EMBODIMENTS

Fig. 6 is a block diagram showing the structure of an embodiment of the vector encoder according to the present invention.

Referring to Fig. 6, there are shown a multiaccess frame memory 20, an adaptive vector quantization encoder 21 and an adaptive vector quantization decoder 22. In Fig. 6, parts designated by the same reference characters as those used in Fig. 3 are the same or like parts as those of Fig. 3.

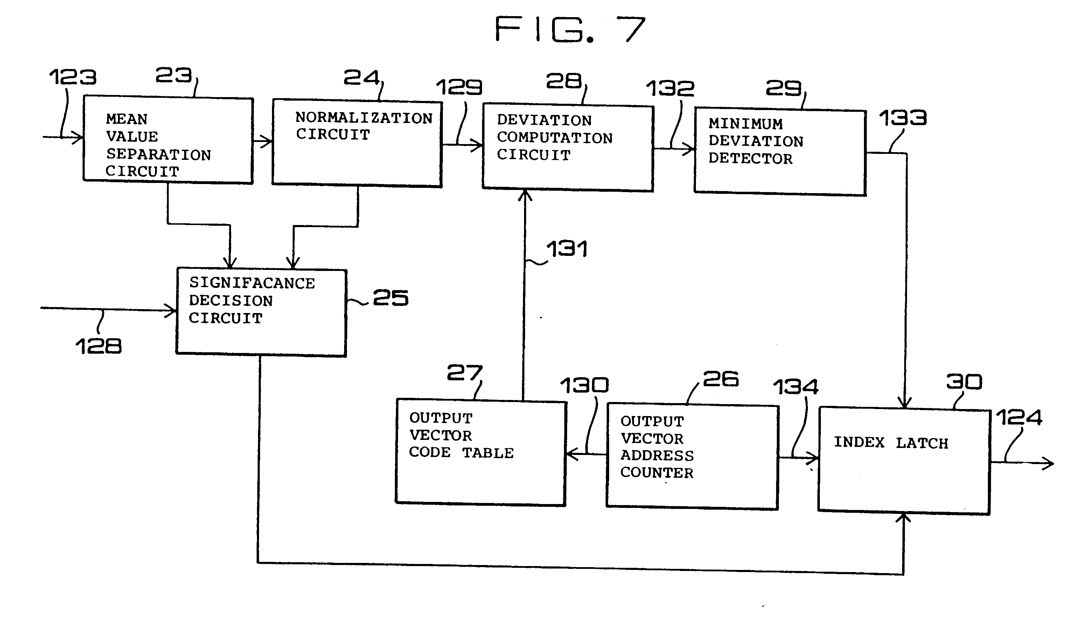

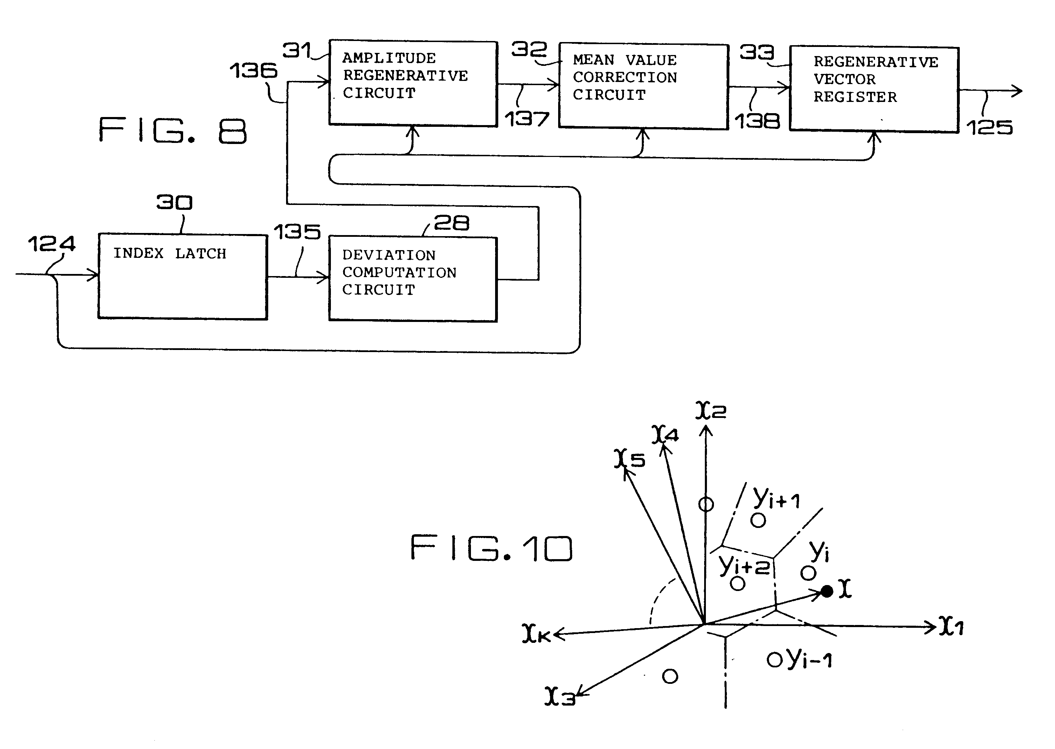

Figs. 7 and 8 are block diagrams showing the respective structure of embodiments of the adaptive vector quantization encoder and the adaptive vector quantization decoder which are used in the present invention respectively.

In Figs. 7 and 8, there are shown a mean value separation circuit 23, a normalization circuit 24, a significance decision circuit 25, an output vector address counter 26, an output vector code table 27, two deviation computation circuits 28, a minimum deviation detector 29, two index latches 30, a mean value correction circuit 32, an amplitude regeneration circuit 31 and a regenerative vector register 33. Like or corresponding parts are designated by like reference characters throughout the drawings.

The manner of operation of a compensating inter-frame vector encoder according to the present invention will be described hereinafter in connection with Fig. 6.

A raster/block scanning converter 2 gives a block scan picture input signal 103 to a movement vector detector 4 and a block scan picture input signal 120 (delayed by several lines so that the block scan picture input signal will not overlap a movement compensation region) to a subtractor 6, for inter-frame vector encoding. A movement vector detector 4 obtains a movement vector 105 (through the same procedure as described in connection with Figs. 3 and 5) on the basis of the picture input signal 103 and a preceding neighbor frame reproduced picture signal 121 and controls a variable delay circuit 5 so that the variable delay circuit 5 gives a predictive picture signal 122 corresponding to the position of the block scan picture input signal 120 to a subtractor 6. The output signals of the subtractor 6, i.e., predictive error picture signals 123 are connected into blocks and are vector-quantized through the adaptive vector quantization encoder 21 and the adaptive vector quantization decoder 22. The predictive error picture signal 123 is vector-quantized to provide a predictive error vector quantization picture signal 125 containing vector-quantized noises. An adder 8 adds the predictive error vector quantization picture signal 125 and the predictive picture signal 122 and gives a reproduced picture signal 126. The reproduced picture signal 126 is written in the multiaccess frame memory 20 to be used for a movement compensation of the next frame.

The above-stated inter-frame encoding process is executed for every block, therefore, each block is defined by a picture element vector. Let the picture input signal 120 is $S_{\ell}^{f}$, the predictive picture signal 122 is $P_{\ell}^{f}$, the predictive error signal 123 is $\epsilon_{\ell}^{f}$, the predictive error vector quantization signal 125 is $\hat{\epsilon}_{\ell}^{f}$, the vector quantization noise is $Q_{\ell}^{f}$, the reproduced picture signal 126 is $\hat{S}_{\ell}^{f}$ and the preceding neighbor reproduced picture signal 121 is

$$\hat{S}_{\ell}^{f-1},$$

where $\ell$ indicates the block sequence number, then inter-frame encoding computation is expressed by

$$\epsilon_{\ell}^{f} = S_{\ell}^{f} - P_{\ell},$$

$$\hat{\epsilon}_{\ell}^{f} = \epsilon_{\ell}^{f} + Q_{\ell}^{f},$$

$$\hat{S}_{\ell}^{f} = \hat{\epsilon}_{\ell}^{f} + P_{\wedge} = S_{\ell}^{f} + Q_{\ell}^{f}, \text{ and}$$

$$\hat{S}_{\ell}^{f-1} = \hat{S}_{\ell}^{f} \cdot z^{-f}.$$

6

The predictive picture signal 122 undergoes movement compensation process and is formed by cutting out a block shifted so that the deviation is minimized from the preceding neighbor regenerative signal 121. The block of the predictive picture signal 122 cut out and formed through movement compensation need not coincide with a block dealt with by inter-frame vector coding in boundary and block size. The movement compensation is performed in a sliding block matching mode while inter-frame vector encoding is performed in a fixed block mode.

Now, the manner of operation of the adaptive vector quantizer which achieves highly efficient encoding through the adaptive vector quantization as the predictive error picture signal 123 is subjected to significance decision in blocks. The adaptive vector quantizer comprises a cascaded connection of the adaptive vector quantization encoder 21 and the adaptive vector quantization decoder 22.

First the principle of the adaptive quantization of the predictive error signal, according to the present invention will be described.

Suppose that the predictive error picture signal $\mathfrak{k}_\ell = [\epsilon_1, \epsilon_2, ..., \epsilon_k]$ arranged in blocks is obtained, as shown in Fig. 9, by subtracting each dimension of the blocks $P_\ell$ of the predictive picture signal from the blocks $S_\ell$ of the picture input signal. The predictive error picture signal $\mathfrak{k}_\ell$ is subjected to conversion to execute significance decision and adaptive vector quantization.

$$\mu\ell = K^{-1} \sum_{j=1}^{k} \epsilon_j,$$

$$\delta_\ell = K^{-1} \sum_{j=1}^{k} |\epsilon_j - \mu_\ell|$$

$$X_j = (\epsilon_j - \mu_\ell)/\delta_\ell$$
$$X_\ell = [X_1, X_2, ..., X_k]$$

That is, the mean value $\mu_\ell$ is separated and normalized with respect to the amplitude factor $\delta_\ell$ to obtain the input vector $X_\ell$. The input vector $X_\ell$ is vector-quantized in a k-dimensional signal space and mapped into an output vector $y_i = [y_{i1}, y_{i2}, ..., y_{ik}]$ of the minimum deviation. The output vector $y_i$ is converted into a predictive error vector quantization picture signal $\widehat{\epsilon_\ell}$ through the following reverse conversion. $\epsilon_j = \delta_\ell \cdot y_{ij} + \mu_\ell$

$$\mathfrak{k}_\ell = [\epsilon_1, \epsilon_2, ..., \epsilon_k]$$

where $\widehat{\mathfrak{k}_\ell} = O$ when $\mu_\ell \leqq T_1$ and $\delta_\ell \leqq T_2$. $T_1$ and $T_2$ defines a threshold 128 for the level decision of $\epsilon_\ell$. The significance of the predictive error picture signal is decided in blocks and the predictive error picture signal is subjected to mean value separation and amplitude normalization to vector-quantize the signal only when the level of the picture signal changes between frames of a predetermined level after movement compensation. When the level of the picture signal is below the predetermined level, there is no movement or the picture can entirely be regenerated through movement compensation. When the significance decision identification code of the block $\mathfrak{k}_\ell$ of the predictive error picture signal is given by $\nu_\ell$ and

$\nu_\ell = O$ when $\mu_\ell \leqq T_1$ and $\delta_\ell \leqq T_2$ and
$\nu_\ell = I$ when $\mu_\ell > T_1$ or $\delta_\ell \geqq T_2$,

then, when insignificant, the block can be encoded by one bit. The information production can be held at a fixed amount by controlling the threshold 128 of $T_1$ and $T_2$.

Now, the principle of vector quantization for encoding the input vector of the predictive error picture signal at a very low bit rate and at a high efficiency will be described hereinafter.

Suppose that $X = [X_1, X_2, ..., X_k]$ is an input vector in k-dimensional signal space $R^k$, while $R_1, R_2, ..., R_N$ are N partitions of $R^k$ and $Y = [y_1, y_2, ..., Y_N]$ is a set of output vectors $y_i = [y_{i1}, y_{i2}, ..., y_{ik}]$, i.e., the representative points of the partial spaces $R_i$ and the index set of $y_i$ is $Y = [1, 2, ..., N]$. Then, vector quantization $V_Q$ is given by the cascaded connection of encoding C and decoding D.

$V_Q(x) = y_i$, if x $R_i$
C : X → i, if $d(x, y_i) < d(x, y_j)$ for all j
D : i → $y_i$

Deviation measurement $d(x, y_i)$ indicates the separation between the input and the output vectors in the k-dimensional signal space and absolute deviation measurement is

$$d(x, y_i) = \sum_{j=1}^{k} |x_j - y_{ij}|$$

The data rate of the index i, which is the vector quantization coding output at this time, is $K^{-1}\log_2 N$ bits/picture element. That is, highly efficient encoding is achieved by encoding vector quantization into the input vector x and the index i of output vector $y_i$ minimizing distortion to the minimum deviation min $d(x, y_i)$. Decoding is achieved simply by conversion into output vector $y_i$ corresponding to the index i. The set Y of output vectors $y_i$ may be obtained either by clustering training of the actual input vectors x of by a predetermined input vector probability model. Fig. 10 shows the relation input vectors and output vectors. The adaptive vector quantization coding outputs are significance decision index $\nu_\ell$, mean value $\mu_\ell$, amplitude factor $\delta_\ell$ and output vector index i.

The manner of operation of the adaptive vector quantization encoder will be described in connection with Fig. 7.

The predictive error picture signal 123 is processed in blocks through the mean value separation circuit 23 and the normalization circuit 24 to be mean value separation normalized and input vector 129 is sent to the deviation computation circuit 28. At this time, the output vector address counter 26 counts up sequentially and reads the output vector 131 from the output vector code table 27. The deviation computation circuit 28 computes the deviation $d(x, y_i)$ between the input vector and the output vector and sends the deviation 132 from each output vector to the minimum deviation detector 29. The minimum deviation detector 29 gives strobing signal 133 so that the output vector address 134 of the output vector address counter 26 corresponding to the index of the output vector is stored in the index latch, when the minimum deviation between the output vector and the input vector is detected. The index latch 30 gives the index of the output vector which has the minimum deviation with respect to the input vector. The significance decision circuit 25 gives, on the basis of the mean value of the blocks of the predictive error picture signal 123 and the amplitude factor, a significance decision identification index and, when significant, the mean value and the amplitude gain. The output signals 124 of the adaptive vector quantization encoder are significance decision index, and, if significant, the mean value of the predictive error picture signal, the amplitude factor and the output vector index.

In the adaptive vector quantization decoder of Fig. 8, upon the reception of the output 124 of the adaptive vector quantization encoder, an output vector corresponding to the output vector index is read from the output vector code table 34 and the amplitude regenerative circuit 31 and the mean value correction circuit 32 compute a predictive error vector quantization picture signal when significant. The regenerative vector register 33 resets the contents to zero when the significance decision identification index indicates insignificance and finally gives the predictive error vector quantization picture signal 125.

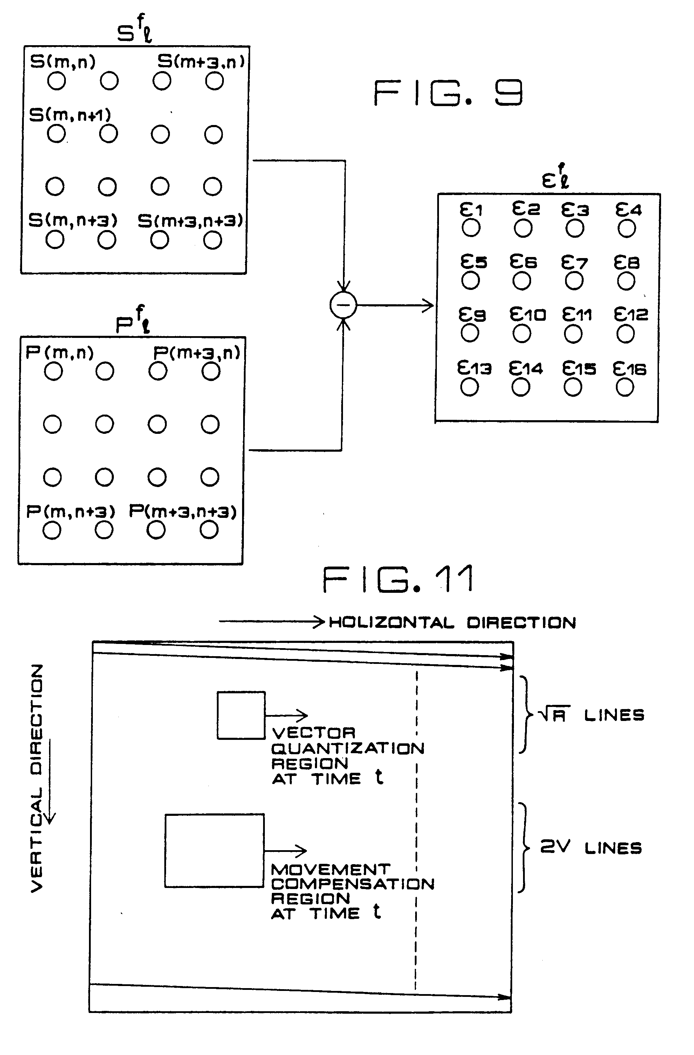

As shown in Fig. 11, it is desirable that the inter-frame vector encoding process and the movement compensation process are controlled by the multi-access frame memory 20, the movement vector detector 4 and the variable delay circuit 5 so that those processes do not overlap each other in respect of time.

As described hereinbefore, the movement compensation inter-frame adaptive vector quantized coded data are the movement vector 105, the significance decision index, and, if significant, the predictive error picture signal mean value, the amplitude factor and the output vector index. These data are subjected to variable-length encoding in the variable-length encoder 9 of Fig. 6 and sent out as the movement compensation inter-frame vector coded output 127 to the transmission segment. Block size for executing the block matching of movement compensation and block size for vector quantization desirably are the same both in horizontal direction and in vertical direction or are related by integer multiple. In such a condition, it is advantageous that the movement vector and the adaptive vector coded output can be subjected to variable-length coding together in block to block correspondence. Furthermore, since the amount of information produced becomes more correspondent to movement, coding is facilitated. Still further, the transmission of a fixed amount of information is possible through the feedback control of the significance decision threshold for adaptive vector quantization.

Another embodiment of the present invention will be described hereinafter.

This embodiment is a vector quantizer capable of highly efficiently encoding picture signals by utilizing the correlation between successive picture frames according to the vector quantization method.

Prior to the concrete description of this embodiment, the basic principle of this embodiment will be described.

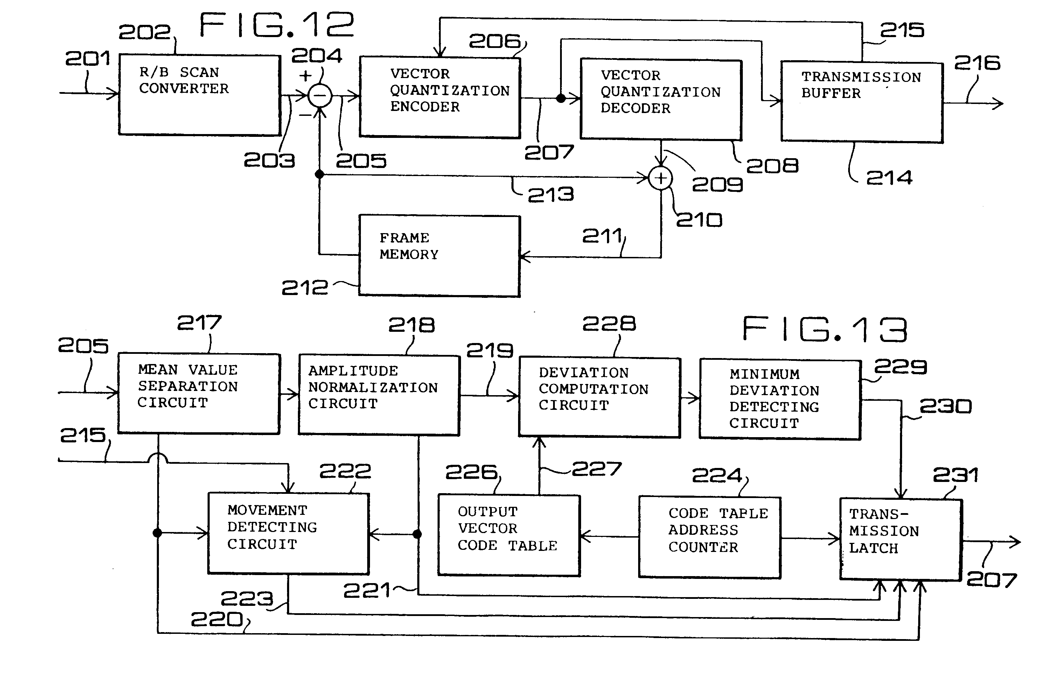

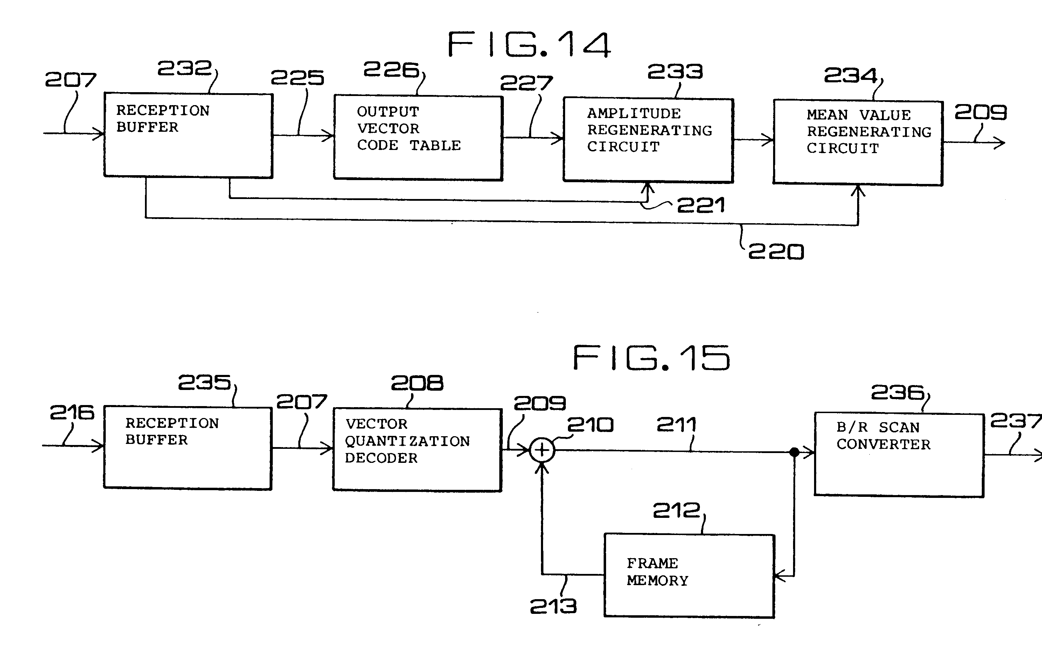

A device capable of attaining inter-frame encoding of such a kind has a constitution as shown in Figs. 12, 13 and 14. An example of concrete constitution will be described hereinafter in connection with the drawings. Fig. 12 is a block diagram showing an encoder. In Fig. 12, there are indicated a digitized picture signal at 201, a raster/block scan converter for converting the picture signal sequence arranged along the direction of raster scanning into blocks each including a plurality of samples at 202, blocked picture signal sequence at 203, a subtractor at 204, the predictive error signal sequence of the blocked picture signal at 205, a movement detection vector quantization at 206, a vector quantization coded output at 207, a vector quantization decoder at 208, vector quantization decoded output, i.e., reproduced predictive error signal sequence, at 209, an adder at 210, the block of reproduced picture signal sequence at 211, a frame memory at 212, the block of reproduced picture signal sequence delayed by one frame cycle, which also is the block of predictive signal sequence for predicting the block of the picture signal sequence 203, at 213, a transmission buffer at 214, feedback control signal at 215 and encoder output at 216. Fig. 13 shows an exemplary constitution of the vector quantization encoder 206 in detail. In Fig. 13, there are indicated a mean value separation circuit at 217, an amplitude normalization circuit at 218, the inter-frame difference of the block of the picture signal sequence normalized with respect to amplitude after mean value has been separated at 219, mean value calculated by the mean value separation circuit 217 at 220, amplitude calculated by the amplitude normalization circuit 210 at 221, a movement detecting circuit which decides, on the basis of the mean value 220 and the amplitude factor 221, whether or not the blocked picture signal sequence being processed presently has made significant change with respect to the block of the one-frame cycle preceding picture signal sequence of the same position at 222, the result of decision of the movement detecting circuit 222 at 223, code table address counter at 224, code table index at 225, output vector code table memory at 226, code table output vector at 227, a deviation computation circuit at 228, a minimum deviation detecting circuit at 229, a minimum deviation indicating signal at 230 and a transmission latch 231.

Fig. 14 shows an exemplary constitution of the vector quantization decoder 208 in detail. In Fig. 14, there are indicated a reception latch at 232, an amplitude regenerating circuit at 233 and a mean value regenerating circuit at 234.

Fig. 15 shows an exemplary embodiment of the decoder for decoding the processed signal. In Fig. 15, indicated at 235 is a reception buffer, at 236 is a block/raster scan converter functioning reciprocally to the raster/block scan converter 202 and at 237 is regenerative picture signal sequence.

The manner of operation of the vector quantizer will be described hereinafter. First the general action of the encoder will be described in connection with Fig. 12.

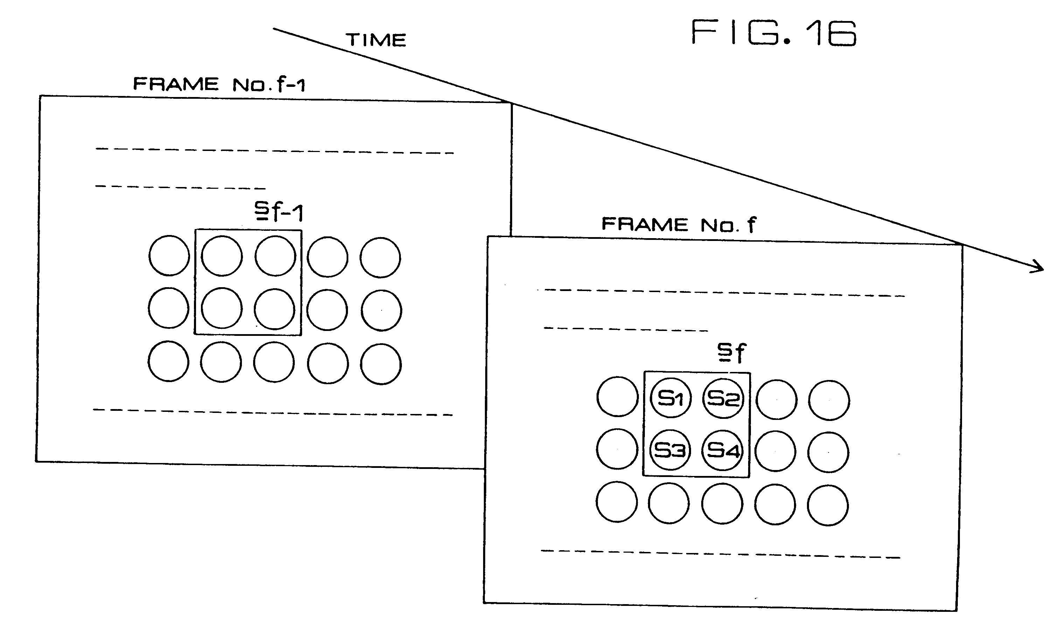

Basically, the encoder is based on the conception of the inter-frame DPCM system. On the frame, the digitized picture signal sequence 201 is regarded as a group of samples arranged in a square lattice, however, input is given in the order of raster scanning. The raster/block scan converter 202 partitions the picture signal sequence 201 into blocks as shown in Fig. 16 and gives output signals corresponding to the blocks. Suppose that a blocked picture signal sequence 203 in a frame No. f is expressed by a signal source vector $S_f = \{S_1, S_2, ..., S_k\}_f$. Fig. 16 shows an example where k = 4. Further, suppose that $\epsilon_f$ is the difference 205 between the signal source vector 203 calculated by the subtractor 204 and the block 213 of the predictive signal sequence, $\hat{\epsilon}_f$ is the block 209 of the reproduced differential signal sequence formed by the vector quantization encoder 206 and the vector quantization decoder 208, $\hat{S}_f$ is the block 211 of the reproduced signal sequence, and $P_f$ is the predictive signal sequence 213 given by the frame memory 212. Then, the general action of the encoder shown in Fig. 12 is expressed by

$$\epsilon_f = S_f - P_f,$$
$$\hat{\epsilon}_f = \epsilon_f + Q,$$
$$\hat{S}_f = P_f + \hat{\epsilon}_f = S_f + Q,$$
$$P_f = \hat{S}_f \cdot Z^{-f},$$

where Q is vector quantization error and $Z^{-f}$ is delay of one-frame cycle caused by the frame memory 212. Accordingly, $P_f$ is equal to the reproduced signal sequence of one-frame cycle before, namely, equal to the

reproduced signal sequence $\hat{S}_{f-1}$ of the block $S_{f-1}$ of the picture signal sequence at the corresponding position in the frame No. f-1. The vector quantization coded output 207 obtained through the process stated above is the difference between the signal source vector 203 and the block 213 of the predictive signal sequence, namely, the result obtained by data-compressing the block 205, $\epsilon_f$, of the predictive error signal by the vector quantization encoder 206. The vector quantization coded output 207 is sent to the transmission buffer 214, and then given to the transmission channel as the encoder output. The actions of the vector quantization encoder 206 and the vector quantization decoder 208 will be described hereinafter in connection with Figs. 13 and 14. In the vector quantization process, a block consisting of k pieces of samples (k: the plural number) is given as an input vector in a k-dimensional signal space, output vectors having minimum deviation with respect to the input vectors given sequentially are selected among a set of output vectors prepared beforehand on the basis of the probability distribution density of the input vector the deviation with respect to the input vector will generally be minimized, and the index attached to the selected output vector is given as a quantized output. In decoding, it is only to read an output vector corresponding to the index from the same set provided also in the decoder. The input vector given is the block $\epsilon_f = \{\epsilon_1, \epsilon_2, ..., \epsilon_k\}_f$ of the predictive error signal sequence 205. A mean value 220 $\mu$ calculated by the use of formula

$$\mu = K^{-1} \sum_{j=1}^{k} \epsilon_j$$

is subtracted from the block 205 $\epsilon_f$, and then the remainder of the block 205 is normalized with respect to amplitude $\sigma$ calculated by the use of formula

$$\sigma = K^{-1} \sum_{j=1}^{k} |\epsilon_j - \mu|$$

by the amplitude normalization circuit 218 to give a mean value separation normalized input vector $\underline{x} = \{x_1, x_2, ..., x_k\}$ 219. That is,

$$X_j = (\epsilon_j - \mu)/\sigma \quad (j = 1, 2, ..., k).$$

In addition to the above-mentioned formula for calculating amplitude, the following formulas, for instance, may be employed.

$$\sigma = [K^{-1} \sum_{j=1}^{k} |\epsilon_j - \mu|^2]^{\frac{1}{2}}$$

$$\sigma = \max_{j} |\epsilon_j - \mu|$$

The mean value separation normalization process distribute the input vector random within a limited range in the k-dimensional signal space, which improves the efficiency of vector quantization. This process requires the preparation of the set of output vector on the basis of the input vector distribution processed through the mean value separation normalization and the process reverse to the mean value separation normalization including amplitude regeneration and mean value regeneration, after reading the output vector in the decoding process. Naturally, vector quantization without this process also is possible. Mean value separation normalizing output vector prepared on the basis of the probability distribution density of the mean value separation normalizing input vector so that the deviation from the mean value separation normalizing input vector is generally minimized is stored in the code table memory 226.

10

When the mean value separation normalizing input vector 219 x is given, the code table address counter 224 sequentially gives indices of vectors stored in the code table memory 226, ie., code table addresses, and reads mean value separation normalizing output vectors 227 $y_i = \{y_{i1}, y_{i2}, ..., y_{ik}\}$ (i: indices) from the code table memory 226. The deviation computation circuit 228 computes the deviation of the mean value separation normalizing input vector x from the mean value separation normalizing output vectors 227 $y_i$. Several deviation computation methods as shown below are available. When the deviation is expressed by $d(x, y_i)$,

$$d(\underline{x}, \underline{y}_i) = \sum_{j=1}^{k} |x_j - y_{ij}|,$$

$$d(\underline{x}, \underline{y}_i) = \sum_{j=1}^{k} |x_j - y_{ij}|^2,$$

$$d(\underline{x}, \underline{y}_i) = \max_{j} |x_j - y_{ij}|.$$

The minimum deviation detecting circuit 229 calculates $d(x, y_i)$ sequentially and gives a strobing signal 230 when a value smaller than the past minimum deviation is obtained. At the same time, the latch 231 stores the index 225. At a stage where the code table address counter 224 has given all the indices, the index i of a mean value separation normalizing output vector which has the minimum deviation with respect to the mean value separation normalizing input vector is stored in the latch 231. This index, the mean value 220 ($\mu$) and the amplitude factor 221 ($\sigma$) are the vector quantization coded outputs, however, the data is compressed further by utilizing the correlation between successive picture frames. Since the input vectors are blocked predictive error signals, the center of the distribution thereof is a zero vector. Therefore, the amount of data 15 reduced greatly by regarding the input vectors distributed in the vicinity of the zero vector as the zero vector and without sending our indices, the mean value and the amplitude factor. The movement detecting circuit 222 receives the mean value 220 $\mu$ and the amplitude factor 221 $\sigma$ and decides whether or not the blocks of the predictive error signal sequence can be regarded as zero vectors, namely, whether or not any significant change (movement) as compared with the one-frame cycle preceding frame has occurred in the present block, for example, according to the following criterion:

when $\mu \leq T_{\vartheta}$ and $\sigma \leq T_{\vartheta}$, significant change has not occurred, and

when $\mu > T_{\vartheta}$ and $\sigma > T_{\vartheta}$, significant change occurred, where $T_{\vartheta}$ is a threshold. Accordingly, the latch 231 gives only a signal indicating "no movement" when a code indicating "no movement" is given as the result of movement detection and gives the index 225, the mean value 220 and the amplitude factor 221 in addition to a signal 223 indicating "movement" when a code indicating "movement" is given, as a vector quantization coded output 207. The transmission buffer 214 monitors the amount of information transmitted controls the threshold $T_{\vartheta}$ on the basis of the feedback control signal 215. Thus the amount of information to be transmitted is controlled. In the vector quantization decoder 208, upon the reception of the signal indicating "movement" included in the vector quantization coded output 207 by the reception latch 232, mean value separation normalizing output vectors 227 $y_i$ are read out according to the index i from the code table memory 226 and are multiplied by the amplitude factor 221 at the amplitude regenerating circuit 233. At the mean value regenerating circuit 234, the mean value 220 is added to the multiplied mean value separation normalizing output vectors to give output vectors, namely, a regenerative predictive error signal sequence 209 $\hat{\epsilon}_f$. That is,

$\hat{\epsilon}_j = \sigma \cdot y_{ij} + \mu$, (j = 1, 2, ..., k).

When the signal indicating "no movement" is given by the transmission latch, the output signals of the transmission latch 231 for the mean value 220 and the amplitude factor 221 are zero and the output vector of the mean value regenerating circuit 234 is a zero vector.

The actions of the decoder will be described hereinafter in connection with Fig. 15.

The reception buffer 234 receives the output 216 of the encoder and decodes the vector quantization coded output signal 207. The vector quantization decoder 208 decodes, as mentioned above, the output vectors, i.e., the predictive error signal sequence 209 $\epsilon_f$ and the adder 210 and the frame memory 212 regenerate the block 211 $\hat{\underline{S}}_f$ Of the regenerative picture signal through a process expressed by

$$\hat{\underline{S}}_f = \underline{P}_f + \hat{\underline{\epsilon}}_f = \underline{S}_f + Q, \text{ and } \underline{P}_f = \hat{\underline{S}}_f \cdot Z^{-f}.$$

where Q is vector quantization error and $Z^{-f}$ is delay of one-frame cycle. The block/raster converter 236 scans blocked regenerative picture signal sequence 211 $\hat{\underline{S}}_f$ along the raster scanning direction to convert the same into a reproduced picture signal sequence 237.

Now, the embodiment constituted on the basis of the above-mentioned principle will be described hereinafter in connection with the drawings.

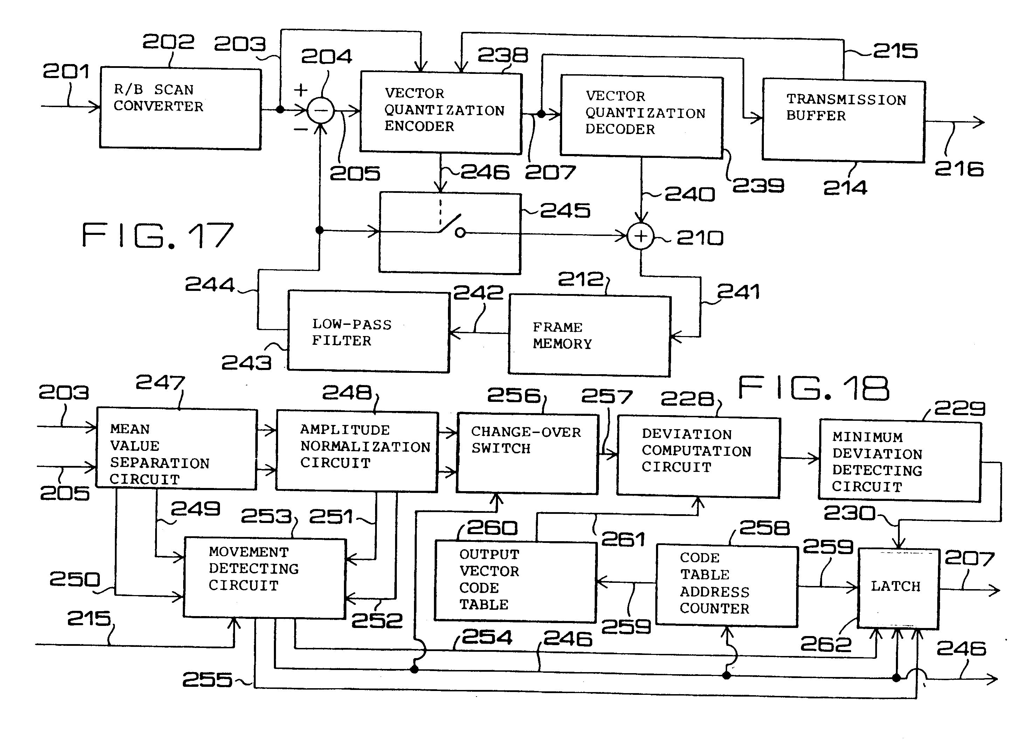

Fig. 17 shows an exemplary embodiment of the embodiment of an encoder according to the present invention. In Fig. 17, indicated at 201 is a digitized picture signal, at 202 is a raster/block scan converter, at 203 is a blocked picture signal sequence, at 204 is a subtractor, at 205 is the predictive error signal sequence of the blocked picture signal, at 238 is a movement detection vector quantization encoder, at 207 is a vector quantization coded output, at 239 is vector quantization decoder, at 240 is a vector quantization decoded output, at 210 is an adder, at 241 are blocks of reproduced picture signal sequence, at 212 is a frame memory, at 242 are blocks of a reproduced picture signal sequence delayed by one-frame cycle, at 243 is a low-pass filter, at 244 are blocks given by filtering the blocks 242 of the delayed reproduced picture signal sequence through the low-pass filter 243 and are also blocks of a predictive signal sequence for predicting the blocks 203 of the picture signal sequence, at 245 is a switch for interrupting or connecting a path for supplying the blocks 244 of the predictive signal sequence to the adder 210, at 246 is a signal which controls the switch 245 according to the result of movement detection, at 214 is a transmission buffer, at 215 is a feedback control signal and at 216 is the output of the encoder.

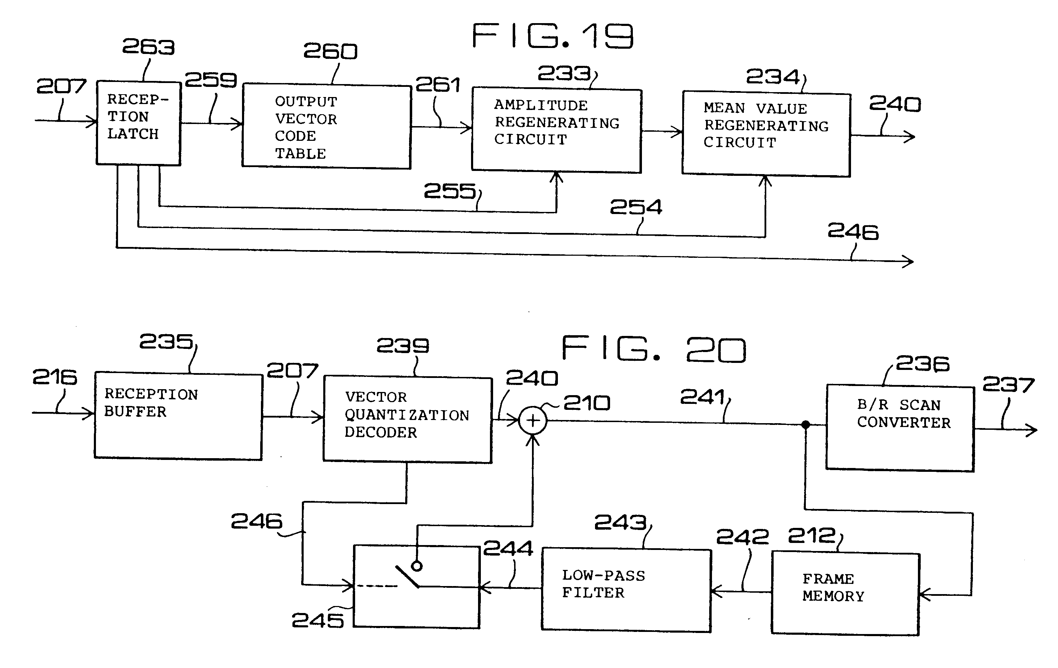

Fig. 18 shows the detail of an exemplary embodiment of the movement detection vector quantization encoder 238. In Fig. 18, indicated at 247 is a parallel mean value separation circuit, at 248 is a parallel amplitude normalization circuit, at 249 is the mean value of the blocks 203 of the picture signal sequence, at 250 is the mean value of the blocks 205 of the predictive error signal sequence, at 251 is the intra-block amplitude factor of the blocks 203 of the picture signal sequence, at 252 is the intra-block amplitude factor of the blocks 205 of the predictive error signal sequence, at 253 is a movement detection circuit, at 254 is either the mean value 249 or the mean value 250 chosen by the movement detection circuit 253, at 255 is either the intra-block amplitude factor 251 or the intra-block amplitude factor 252, at 246 is a signal corresponding to the result of decision of the movement detection circuit 253, at 256 is a switch for changing over between the blocks of the picture signal sequence through mean value separation normalization and the blocks of the predictive error signal sequence according to the result 246 of decision of the movement detection circuit 253, at 257 are blocks of the picture signal sequence after mean value separation normalization or the blocks of the predictive error signal sequence, selected by the switch 256, at 258 is a code table address counter, at 259 is a code table index, at 260 is an output vector code table memory, at 228 is a deviation computation circuit, at 229 is a minimum deviation detection circuit, at 230 is a signal indicating the minimum deviation, at 261 is a code table output vector and at 262 is a transmission latch.

Fig. 19 shows the detail of an exemplary embodiment of the vector quantization decoder 239. In Fig. 19, indicated at 263 is a reception latch, at 233 is an amplitude regenerating circuit and at 234 is a mean value regenerating circuit.

Fig. 20 shows an example of the structure of the decoder included in this embodiment for decoding a processed signal. In Fig. 20, indicated at 235 is a reception buffer, at 236 is a block/raster scan converter and at 237 is a reproduced picture signal sequence.

First, the general operation of the encoder will be described in connection with Fig. 17. Basically, this encoder is based on the conception of inter-frame DPCM. A digitized picture signal sequence 201 is a sequence of samples given sequentially along raster scanning direction. The raster/block scan converter 202 partitions the picture signal sequence into blocks and scans and converts the picture signal sequence sequentially in blocks. Suppose that a blocked picture signal sequence 203 in a frame No. f is expressed by a signal source vector $\underline{S}_f = \{S_1, S_2, ..., S_k\}_f$. Then, the basic operation of the encoder of Fig. 17, namely, the operation of the encoder when the switch 245 is closed and the blocks 244 of the predictive signal sequence is given to the adder 210, is expressed by the following formulas:

$$\underline{\epsilon}_f = \underline{S}_f - \underline{P}_f$$
$$\hat{\underline{\epsilon}}_f = \underline{\epsilon}_f + \overline{Q}$$
$$\hat{\underline{S}}_f = \underline{P}_f + \hat{\underline{\epsilon}}_f = \underline{S}_f + Q$$
$$\underline{P}_f = \overline{F} \cdot (\hat{\underline{S}}_f \cdot Z^{-1})$$

where $\epsilon_f$ is the difference 205 between a signal source vector 203 calculated by the subtractor 204 and the block $\overline{2}$44 of the predictive signal sequence, $\hat{\epsilon}_f$ is the block 209 of the reproduced differential signal sequence formed by the vector quantization encoder 238 and the vector quantization decoder 239 $\hat{S}_f$ is the block 241 of the reproduced picture signal sequence, $P_f$ is the predictive signal sequence 244, Q $\overline{is}$ vector quantization error, $Z^{-f}$ is delay of one-frame cycle caused by the frame memory 212 and F is the elimination of high frequencies by the low-pass filter 243. Therefore, $P_f$ is a signal resulting from the elimination of high frequencies from the reproduced signal sequence $\hat{S}_{f-1}$ of the blocks $S_{f-1}$ of the picture signal sequence at the same position in the frame one-frame cycle before the present frame, i.e., the frame No. f-1. The vector quantization error are such as granular noises appearing in the high-frequency band. Therefore, the low-pass filter 243 prevents the accumulation of the quantization error and always acts so that high-quality pictures are obtained. In the process described above, the switch 245 is closed and the block 244 of the predictive signal sequence is applied to the adder 210. However, according to the operation in this process, the power of the block 205 of the predictive error signal sequence becomes very large when the picture changes greatly, which increases the vector quantization error.

To obviate such increase in vector quantization error, this embodiment is designed to subject the block $S_f$ of the picture signal sequence to vector quantization encoding as it is instead of the block $\epsilon_f$ of the predictive error signal sequence, when the picture changes greatly, namely, when the power of the predictive error signal increases. To carry out this process, the control signal 246 opens the switch 245, the adder 210 allows substantially the vector quantization decoded output 240 to pass through and to become the block 241 of the reproduced picture signal sequence as it is. The movement detection vector quantization encoder 238 makes the decision of changeover and the changeover operation. These operations will be described in detail afterward. The vector quantization coded output 207 is sent to the transmission buffer 214 and is sent out to the transmission channel as the encoder output 216.

The actions of the vector quantization encoder 238 and the vector quantization decoder 239 will be described hereinafter in connection with Figs. 18 and 19.

The block 203 $S_f$ of the picture signal sequence and the block 205 $P_f$ of the predictive error signal sequence are given as input signals. The parallel mean value separation circuit 247 subtracts the mean value 249 $\mu_s$ and $\mu_\epsilon$ operated by the use of the following formulas:

$$\mu_s = K^{-1} \sum_{j=1}^{k} S_j \quad \text{and}$$

$$\mu_\epsilon = K^{-1} \sum_{j=1}^{k} \epsilon_j$$

from the blocks $S_f$ and $P_f$ respectively. Furthermore, those blocks are normalized by the parallel amplitude normalizing circuit 248 with respect to the amplitude factors 251 $\sigma_s$ and 252 $\sigma_\epsilon$ operated by the following formulas:

$$\sigma_s = K^{-1} \sum_{j=1}^{k} |S_j - \mu_s| \quad \text{and}$$

$$\sigma_\epsilon = K^{-1} \sum_{j=1}^{k} |\epsilon_j - \mu_\epsilon|.$$

These processes form mean value separation normalized vectors $\underline{x}_s$ and $\underline{x}_\epsilon$. That is,

$x_{sj} = (S_j - \mu_s)/\sigma_s \ (\underline{x}_s = \{x_{s1}, x_{s2}, ..., x_{sk}\})$ and
$x_{\epsilon j} = (\epsilon_j - \mu_\epsilon)/\sigma_\epsilon \ (\underline{x}_\epsilon = \{x_{\epsilon 1}, x_{\epsilon 2}, ..., x_{\epsilon k}\})$.

Amplitude calculating methods other than those described above are available. Those alternative methods are, for instance,

$$\sigma_s = [K^{-1} \sum_{j=1}^{k} |s_j - \mu_s|^2]^{\frac{1}{2}}, \quad \sigma_\epsilon = [K^{-1} \sum_{j=1}^{k} |\epsilon_j - \mu_\epsilon|^2]^{\frac{1}{2}},$$

$$\sigma_s = \max_j |s_j - \mu_s|, \quad \text{and} \quad \sigma_\epsilon = \max_j |\epsilon_j - \mu_\epsilon|.$$

The mean value separation normalizing process distributes the input vectors random within a limited range in a k-dimensional signal space, which improves vector quantization efficiency. Although two sets of blocks are given as input vectors in this process, there is a process to subject the blocks of the predictive error signal sequence to vector quantization, basically, to utilize the correlation between successive pictures. Furthermore, to compress the data, the blocks of the predictive error signal sequence are regarded as zero vectors when those blocks are nearly zero. That is, it is decided that no significant change (movement) has occurred from the one-frame preceding frame. This decision is made also by the movement detector 253. The decision is made, for example, by comparing $\mu_\epsilon$ and $\sigma_\epsilon$ with a threshold $T_{ij}$ that

movement has occurred ($\epsilon_f \approx 0$) when $\mu_\epsilon \leq T_{ij}$ and $\sigma_\epsilon \leq T_{ij}$ and

movement has not occurred $\overline{(\epsilon_f \neq 0)}$ when $\mu_\epsilon > T_{ij}$ or $\sigma_\epsilon > T_{ij}$.

The threshold $T_{ij}$ is controlled by the feedback control signal 215 given by the transmission buffer 214 so that the amount of information to be transmitted is fixed. Furthermore, the movement detector 253 has, in addition to the above-mentioned function, a function to made decision for changing over the input vectors to the blocks $S_f$ of the picture signal sequence as described above when the movement is very large. This decision is made on an assumption that the movement has been detected through the above-mentioned process, on the basis of the following conditions:

$\epsilon_f$ is selected as input vector when $\sigma_\epsilon \leq \sigma_s$ and

$\overline{S_f}$ is selected as input vector when $\sigma_\epsilon > \sigma_s$.

This changeover process is based on a conception that $\sigma_s$ and $\sigma_\epsilon$ represent approximately the respective powers of those signals. This is because the smaller the power of signal for vector quantization, the smaller is the vector quantization error of the reproduced signal. The movement detection circuit 253 gives the result of the decision as the signal 246 and the changeover switch 256 connects either the mean value separation normalized input vector $x_s$ or $x_\epsilon$ to the next deviation computing circuit 228 according to the signal 246. Suppose that the mean value separation normalized input vector 257 thus selected is expressed by $x = \{x_1, x_2, ..., x_k\}$. The movement detection circuit 253 gives, according to the result of the decision, the mean value ($\mu$) 254 and the amplitude factor 255 of the selected vector. Mean value separation normalized output vectors prepared on the basis of the probability distribution density of the mean value separation normalized input vectors so that the deviation thereof from the mean value separation normalized input vectors is minimized generally are stored beforehand in the code table memory 260 at different addresses corresponding to the distributions of $S_f$ and $\epsilon_f$.

When the mean value separation normalized input vector 257 is given, the code table address counter 258 sequentially gives the indices of the corresponding vector groups, i.e., code table addresses, according to the signal 246 indicating the result of movement detection and reads mean value separation normalized output vectors $y_i = \{y_{i1}, y_{i2}, ```, y_{ik}\}$ (i: index) 261 from the code table memory 260. The index i includes not only the information indicating the code table address but also the information indicating whether the vector indicated by the index i is for $S_f$ or for $\epsilon_f$. The distortion computing circuit 228 computes the distortion of the mean value separation normalized input vector 257 x from the mean value separation normalized output vector 261 $y_i$. Several computation processes are available. For example, the following processes are available. When the deviation is expressed by $d(x, y_i)$,

14

$$d(\underline{x}, \underline{y_i}) = \sum_{j=1}^{k} |x_j - y_{ij}|,$$

$$d(\underline{x}, \underline{y_i}) = \sum_{j=1}^{k} |x_j - y_{ij}|^2, \quad \text{and}$$

$d(\underline{x}, \underline{y_i}) = \max |x_j - y_{ij}|$.

The minimum deviation detection circuit 229 gives the strobing signal 230 when the deviation $d(x, y_i)$ calculated sequentially are smaller than the past minimum deviation. At a stage where the code table address counter 258 has given all the addresses of the vectors to be compared, the index i of a mean value separation normalized output vector which gives the minimum deviation for x is stored in the latch 262. The latch 262 gives, according to the output signal 246 of the movement detection circuit 253, a signal indicating "no movement" when the signal 246 indicates "no movement" and the index, the mean value 254 and the amplitude factor 255 in addition to a signal indicating "movement" as the vector quantization encoded output 207 when the signal 246 indicates "movement". The latch 263 (Fig. 19) of the vector quantization decoder 239 receives the vector quantization coded output 207. When the vector quantization coded output 207 indicates "movement", the latch 263 decides from the index i which one of $S_f$ and $\epsilon_f$ is vector-quantized and gives a signal equivalent to the output 246 of the movement detection circuit. At the same time, the latch reads, according to the index 259, the mean value separation normalized output vector 261 $y_i$ from the code table memory 260 The amplitude regenerating circuit 233 multiplies the output vector $y_i$ by the amplitude factor 255 and the mean value regenerating circuit 234 adds the mean value 254 to regenerate the output vector. This process is expressed by

$\hat{\epsilon}_j = \sigma \cdot y_{ij} + \mu (\sigma = \sigma_\epsilon, \mu = \mu_\epsilon)$ or
$\hat{S}_j = \sigma \cdot y_{ij} + \mu (\sigma = \sigma_s, \mu = \mu_s)$.

When the latch 263 (Fig. 19) receives the signal indicating "no movement", the latch 263 gives a code for "no movement" as the signal 246 and zero signals for the mean value 254 and the amplitude factor 255. Then, the output vector 240 becomes a zero vector.

The operation of the decoder of this embodiment will be described hereinafter in connection with Fig. 20.

The reception buffer 235 receives the encoder output 216 and decode the vector quantization encoder output signal 207. The vector quantization decoder 239 produces, as mentioned above, the output vector 240. The switch 245 is closed when the signal 246 indicates "movement" or "no movement" and the coded vector is $\epsilon_f$, and the block 241 $S_f$ of the reproduced picture signal sequence by the adder 210 and the frame memory 212, in the manner as expressed by the following formulas:

$\hat{S}_f = P_f + \hat{\epsilon}_f = S_f + Q$,
$\bar{P}_f = \bar{F} \cdot (\hat{S}_f \cdot Z^{-1})$

where Q is vector quantization error, $Z^{-1}$ is delay of one-frame cycle caused by the frame memory 212 and F is the elimination of high-frequency band by the low-pass filter 243. When the signal 246 indicates "movement and that $\hat{S}_f$ is encoded, the switch 245 is opened to let the decoded $S_f$ through the adder 210. The blocks/raster converter 236 scans the blocks 241 $\hat{S}_f$ of the blocked reproduced picture signal sequence along the raster scanning direction to convert, the reproduced picture signal sequence into the reproduced picture signal sequence 237. In this embodiment, the respective amplitudes of $\epsilon_f$ and $S_f$ are compared to change over the input vector to be coded between $\epsilon_f$ and $S_f$, however, the input vector may be changed over between $\epsilon_f$ and $S_f$ by comparing the amplitude of $\epsilon_f$ with that of $P_f$. In the latter case, the input vector is

$\epsilon_f$ when $\sigma_\epsilon \leqq \sigma_p$, or $S_f$ when $\sigma_\epsilon > \sigma_p$

where $\sigma_p$ is the amplitude of $P_f$.

Naturally, a tree-search vector quantizer may be employed instead of the full-search vector quantizer employed herein. Furthermore, this invention is applicable to shortening the code length, namely, to

15

EP 0 137 314 B1

preventing the increase of the amount of information, by limiting the code table address to be searched, when sudden movement is detected.

## Claims

**1.** An inter-frame prediction videocoder comprising a movement vector detector (4) which outputs a movement vector (105) descriptive for the movement in horizontal and vertical direction of a preceding picture signal block which is the most analogous with a present input signal block, a variable-length encoder (9) and a DPCM-loop having a subtractor (6), a quantizer (7), an adder (8) and a frame memory (3, 20), characterized in that the quantizer is implemented by an adaptive vector quantization encoder (21) followed by an adaptive vector quantization decoder (22); the vector quantization encoder (21) processing the output signal (123 in Fig. 6 and 7) of the subtractor (6) in blocks and comprising a mean value separation circuit (23) and an amplitude normalizing circuit (24) for deriving a mean value, an amplitude factor and an input vector (129) from the output signal (123) of the subtractor (6) said amplitude factor being determined by the difference between said output signal (123) and said mean value; a significance decision circuit (25) which is supplied by threshold values (128), compares the. mean value and the amplitude factor with said threshold values and outputs a significance decision index; a deviation computation circuit (28) and a minimum deviation detector (29) for detecting minimum deviation between said input vector (129) and an output vector (131) read from an output vector code table (27); an index latch (30) for receiving the output of said minimum deviation detector (29) in the form of a strobing signal (133) such that the address (134) of said output vector code table (27) is stored as an output vector index in said index latch, when the minimum deviation between said output vector (131) and said input vector (129) is detected; said variable length encoder (9) encoding said movement vector (105) said significance decision index, said mean value, said amplitude factor and said output vector index if the threshold value (128) is exceeded, but only encoding said movement vector and said significance decision index when the threshold value (128) is not exceeded.

**2.** A videocoder according to claim 1, characterized in that said output vector code table (27) stores a set of output vectors produced previously on the basis of a probability model of said input vectors.

**3.** A videocoder according to claim 1 or 2, characterized in that said adaptive vector quantization decoder (22) which receives the output (124) of said adaptive vector quantization encoder (21), reads an output vector corresponding to the output vector index from the output vector code table (27) of the same contents as that of the adaptive vector quantization encoder (21), multiplies the output vector by said amplitude factor and adds said mean value to the product to regenerate the predictive error vector quantized picture signal block, and gives the predictive error vector quantized picture signal block as zero when the significance decision index indicates that the predictive error vector quantized picture signal block is not significant.

**4.** An inter-frame prediction videocoder comprising a movement detecting circuit (222, 253), a transmission unit (214), a DPCM-loop processing a picture signal sequence in blocked form (203) having a subtractor (204), a quantizer (206, 238), an adder (210) and a frame memory (212), characterized in that said quantizer is a vector quantization encoder comprising a mean value separation circuit (217, 247) and an amplitude normalizing circuit (218, 248) for deriving a mean value (220, 249, 250, 254), an amplitude factor (221, 251, 252, 255) and an input vector (219, 257) from the output signal (205) of the subtractor (204), said amplitude factor being determined by the difference between said output signal and said mean value, and a movement detecting circuit (222, 253) which decides on the basis of a comparison between a threshold value and said mean value (220, 249, 250) and said amplitude factor (221, 251, 252) respectively whether or not the blocked picture signal (203) being presently processed has made a significant change with respect to the preceding frame and outputs, as a result of its decision, a signal (223, 246) indicating movement or no movement, and a deviation computation circuit (228) and a minimum deviation detector (229) for detecting minimum deviation between said input vector (219, 257) and an output vector (227, 261) read from an output vector code table (226, 260); a latch (231, 262) for receiving the output of said minimum deviation detector (229) in the form of a strobing signal (230) such that the address (259) of said output vector

16

code table (226, 260) is stored as an output vector index in said latch when the minimum deviation between said output vector (227, 261) and said input vector (219, 257) is detected, and said transmission unit is an output transmission buffer (214) which follows said latch and receives and outputs said signal (223, 246), said mean value, said amplitude factor and said output vector index if the threshold value (215) is exceeded, but only receives and outputs said signal (223, 246) when the threshold value (215) is not exceeded, and that said transmission buffer (214) additionally produces a control signal (215) influencing said threshold value so that the amount of information sent out by said transmission buffer is controlled.

5. A videocoder according to claim 4, characterized in that the output transmission buffer (214) processes said signal indicating movement, said index of the output vector, said mean value and said amplitude factor together through variable-length coding.

6. A videocoder according to claim 4 or 5, characterized in that the predictive error signal (205) outputted by said subtractor (204) and said present picture signal supplied to said subtractor (204) are both fed to and processed by said mean value separation circuit (247) and said amplitude normalizing circuit (248), and that a changeover switch (256) is provided between said amplitude normalizing circuit .(248) and said deviation computation circuit (228), which switch is connected to the output of said amplitude normalizing circuit (248) and controlled by said signal (246) indicating movement or no movement, so as to receive either said predictive error signal block (205) processed through mean value separation and normalization or the block of the present picture signal (203) processed likewise through mean value separation and normalization, as an input vector;
and that said output vector code table (260) stores sets of output vectors produced previously on the basis of a probability distribution density of said two kinds of input vectors so that the deviation between said input vector and said output vector is minimized.

7. A videocoder according to claims 4 to 6, characterized by
a vector quantization decoder (239) which receives the output of said vector quantization encoder (238), reads an output vector corresponding to the output vector index from an output vector code table having the same contents as those of the output vector code table (260) of the vector quantization encoder (238), multiplies the output vector read from the output vector code table (260) by said amplitude factor and adds said mean value to the result of said multiplication to obtain vector quantization decoded signals, and outputs a zero block (240) when the said signal (246) indicates no movement; an adder (210) connected to the output of said vector quantization decoder (239) and, via a switch (245) controlled by said signal (246), to the output of a frame memory (212) the input of which is supplied by the adder-output constituting the reproduced blocks of the picture signal sequence, said switch (245) disconnecting said frame memory (212) from said adder (210) when said signal (246) indicates movement.

## Revendications

1. Vidéocodeur à prédiction inter-trames comprenant un détecteur de vecteur de mouvement (4) qui délivre en sortie un vecteur de mouvement (105) représentatif du mouvement dans la direction horizontale et verticale d'un bloc de signal d'image précédent qui est le plus analogue à un bloc de signal d'entrée présent, un codeur à longueur variable (9) et une boucle de système MIC différentiel comportant un soustracteur (6), un quantificateur (7), un additionneur (8) et une mémoire de trames (3, 20), caractérisé en ce que le quantificateur est mis en oeuvre par un codeur de quantification vectorielle adaptative (21) suivi d'un décodeur de quantification vectorielle adaptative (22); le codeur de quantification vectorielle (21) traitant le signal de sortie (123 sur les figures 6 et 7) du soustracteur (6) en blocs et comprenant un circuit de séparation de la valeur moyenne (23) et un circuit de normalisation d'amplitude (24) servant à obtenir une valeur moyenne, un facteur d'amplitude et un vecteur d'entrée (129) à partir du signal de sortie (123) du soustracteur (6), ledit facteur d'amplitude étant déterminé par la différence entre ledit signal de sortie (123) et ladite valeur moyenne; un circuit de détermination de poids (25) qui reçoit des valeurs de seuil (128), compare la valeur moyenne et le facteur d'amplitude auxdites valeurs de seuil et délivre en sortie un indice de détermination de poids; un circuit de calcul d'écart (28) et un détecteur d'écart minimum (29) pour détecter l'écart minimum entre ledit vecteur d'entrée (129) et un vecteur de sortie (131) extrait d'une table de codes de vecteurs de sortie (27); un verrou d'indices (30) pour recevoir la sortie dudit détecteur d'écart minimum (29) sous la forme d'un signal de strobage (133) de manière telle que l'adresse (134) de ladite table de codes de vecteurs de sortie (27) est enregistrée en tant qu'indice de vecteur de sortie dans ledit verrou d'indices lorsque l'écart minimum entre ledit vecteur de sortie (131) et ledit vecteur d'entrée (129) est détecté; ledit codeur à longueur variable (9) codant ledit vecteur de mouvement (105) et ledit indice de détermination de poids, ladite valeur moyenne, ledit facteur d'amplitude et ledit indice de vecteur de sortie si la valeur de seuil (128) est dépassée, mais ne codant que ledit vecteur de mouvement et ledit indice de détermination de poids lorsque ladite valeur de seuil (128) n'est pas dépassée.

2. Vidéocodeur selon la revendication 1, caractérisé en ce que ladite table de codes de vecteurs de sortie (27) enregistre un ensemble de vecteurs de sortie produits au préalable sur la base d'un modèle de probabilité desdits vecteurs d'entrée.

3. Vidéocodeur selon la revendication 1 ou 2, caractérisé en ce que ledit décodeur de quantification vectorielle adaptative (22) qui reçoit la sortie (124) dudit codeur de quantification vectorielle adaptative (21), lit un vecteur de sortie correspondant à l'indice de vecteur de sortie en provenance de la table de codes de vecteurs de sortie (27) présentant le même contenu que celui du codeur de quantification vectorielle adaptative (21), multiplie le vecteur de sortie par ledit facteur d'amplitude et ajoute ladite valeur moyenne au produit pour régénérer le bloc de signal d'image à quantification vectorielle d'erreur de prédiction, et donne un bloc de signal d'image à quantification vectorielle d'erreur de prédiction égal à zéro lorsque l'indice de détermination de poids indique que le bloc de signal d'image à quantification vectorielle d'erreur de prédiction n'est pas significatif.

4. Vidéocodeur à prédiction inter-trames comprenant un circuit de détection de mouvement (222, 253), une unité de transmission (214), une boucle de système MIC différentiel traitant une séquence de signal d'image sous la forme de blocs (203) et comportant un soustracteur (204), un quantificateur (206, 238), un additionneur (210) et une mémoire de trames (212), caractérisé en ce que ledit quantificateur est un codeur de quantification vectorielle comprenant un circuit de séparation de valeur moyenne (217, 247) et un circuit de normalisation d'amplitude (218, 248) pour obtenir une valeur moyenne (220, 249, 250, 254), un facteur d'amplitude (221, 251, 252, 255) et un vecteur d'entrée (219, 257) à partir du signal de sortie (205) du soustracteur (204), ledit facteur d'amplitude étant déterminé par la différence entre ledit signal de sortie et ladite valeur moyenne, et un circuit de détection de mouvement (222, 253) qui décide, sur la base d'une comparaison entre une valeur de seuil et ladite valeur moyenne (220, 249, 250) et ledit facteur d'amplitude (221, 251, 252) respectivement si ou non le signal d'image en blocs (203) faisant couramment l'objet du traitement a changé d'une manière significative par rapport à la trame précédente et délivre en sortie, en tant que résultat de sa décision, un signal (223, 246) indiquant un mouvement ou une absence de mouvement, et un circuit de calcul d'écart (228) et un détecteur d'écart minimum (229) pour détecter l'écart minimum entre ledit vecteur d'entrée (219, 257) et un vecteur de sortie (227, 261) extrait d'une table de codes de vecteurs de sortie (226, 260); un verrou (231, 262) pour recevoir la sortie dudit détecteur d'écart minimum (229) sous la forme d'un signal de strobage (230) de telle manière que l'adresse (259) de ladite table de codes de vecteurs de sortie (226, 260) soit enregistrée en tant qu'indice de vecteur de sortie dans ledit verrou lorsque l'écart minimum entre ledit vecteur de sortie (227, 261) et ledit vecteur d'entrée (219, 257) est détecté, et ladite unité de transmission est un tampon de transmission de sortie (214) qui suit ledit verrou et reçoit et délivre en sortie ledit signal (223, 246), ladite valeur moyenne, ledit facteur d'amplitude et ledit indice de vecteur de sortie si la valeur de seuil (215) est dépassée, mais ne reçoit et ne délivre en sortie ledit signal (223, 246) que lorsque la valeur de seuil (215) n'est pas dépassée, et ledit tampon de transmission (214) produit en outre un signal de commande (215) influençant ladite valeur de seuil de sorte que la quantité d'information envoyée par ledit tampon de transmission est commandée.

5. Vidéocodeur selon la revendication 4, caractérisé en ce que le tampon de transmission de sortie (214) traite ledit signal indiquant un mouvement, ledit indice du vecteur de sortie, ladite valeur moyenne et ledit facteur d'amplitude en même temps par l'intermédiaire d'un codage à longueur variable.

6. Vidéocodeur selon la revendication 4 ou la revendication 5, caractérisé en ce que le signal d'erreur de prédiction (205) délivré par ledit soustracteur (204) et ledit signal d'image courant fourni audit soustracteur (204) sont tous deux envoyés audit circuit de séparation de valeur moyenne (247) et audit circuit de normalisation d'amplitude (240) et traités par eux, et en ce qu'un interrupteur de commutation (256) est prévu entre ledit circuit de normalisation d'amplitude (248) et ledit circuit de calcul d'écart

EP 0 137 314 B1

(228), cet interrupteur étant relié à la sortie dudit circuit de normalisation d'amplitude (248) et commandé par ledit signal (246) indiquant un mouvement ou l'absence de mouvement, de façon à recevoir soit ledit bloc de signal d'erreur de prédiction (205) traité par l'intermédiaire de la séparation de valeur moyenne et de la normalisation, soit le bloc du signal d'image courant (203) traité de même par l'intermédiaire de la séparation de valeur moyenne et de la normalisation, en tant que vecteur d'entrée; et en ce que ladite table de codes de vecteurs de sortie (260) enregistre des ensembles de vecteurs de sortie produits au préalable sur la base d'une densité de répartition de probabilité desdites deux sortes de vecteurs d'entrée de sorte que l'écart entre ledit vecteur d'entrée et ledit vecteur de sortie soit minimisé.

7. Vidéocodeur selon les revendications 4 à 6, caractérisé par un décodeur de quantification vectorielle (239) qui reçoit la sortie dudit codeur de quantification vectorielle (238), lit un vecteur de sortie correspondant à l'indice de vecteur de sortie dans une table de codes de vecteurs de sortie présentant le même contenu que celui de la table de codes de vecteurs de sortie (260) du codeur de quantification vectorielle (238), multiplie le vecteur de sortie lu dans la table de codes de vecteurs de sortie (260) par ledit facteur d'amplitude et ajoute ladite valeur moyenne au résultat de ladite multiplication pour obtenir des signaux à décodage de quantification vectorielle, et délivre un bloc zéro (240) lorsque ledit signal (246) indique l'absence de mouvement; un additionneur (210) relié à la sortie dudit décodeur de quantification vectorielle (239) et, via un commutateur (245) commandé par ledit signal (246), à la sortie d'une mémoire de trames (212) dont l'entrée est fournie par la sortie de l'additionneur constituant les blocs reproduits de la séquence de signal d'image, ledit commutateur (245) déconnectant ladite mémoire de trames (212) dudit additionneur (210) lorsque ledit signal (246) indique un mouvement.

## Patentansprüche

1. Zwischenrahmen-Prädiktions-Videocodierer mit einem Detektor (4) für einen Bewegungsvektor zur Erzeugung eines Bewegungsvektors (105), der die Bewegung eines vorausgehenden Bildsignalblocks, der einem gegenwärtigen Eingangssignalblock am ähnlichsten ist, in horizontaler und vertikaler Richtung beschreibt,
einem variablen Längencodierer (9) und einer DPCM-Schleife mit einem Subtrahierer (6), einem Quantisierer (7), einem Addierer (8) und einem Rahmen(Bild-)speicher (3, 20), dadurch gekennzeichnet, daß
- der Quantisierer durch einen adaptiven Vektor-Quantisierungscodierer (21) implementiert wird, auf den ein adaptiver Vektor-Quantisierungsdecodierer (22) folgt;
- der Vektor-Quantisierungscodierer (21) das Ausgangssignal (123 in Fig. 6 und 7) des Subtrahierers (6) in Blöcken verarbeitet und eine Schaltung (23) zur Abtrennung eines Mittelwertes sowie eine Amplituden-Normalisierungsschaltung (24) zur Ableitung eines Mittelwertes, eines Amplitudenfaktors und eines Eingangsvektors (129) aus dem Ausgangssignal (123) des Subtrahierers (6) aufweist, wobei der Amplitudenfaktor aus der Differenz zwischen dem Ausgangssignal (123) und dem Mittelwert bestimmt wird;
- eine Schaltung (25) zur Auswertung einer Wertigkeit vorgesehen ist, an der Schwellwerte (128) anliegen, und die den Mittelwert und den Amplitudenfaktor mit den Schwellwerten vergleicht und einen über eine Wertigkeit entscheidenden Index erzeugt;
- eine Schaltung (28) zur Berechnung einer Abweichung sowie ein Detektor (29) für minimale Abweichungen vorgesehen sind, der zur Erfassung einer minimalen Abweichung zwischen dem Eingangsvektor (129) und einem Ausgangsvektor (131), der aus einer Codetabelle (27) für Ausgangsvektoren ausgelesen wurde, dient; und
- ein Indexschalter (30) vorgesehen ist, an dem der Ausgang des Detektors (29) für minimale Abweichungen in Form eines Meß- bzw. Auswertesignales (133) anliegt, so daß die Adresse (134) der Codetabelle (27) für Ausgangsvektoren in dem Indexschalter als Ausgangsvektorindex gespeichert wird, wenn die minimale Abweichung zwischen dem Ausgangsvektor (131) und dem Eingangsvektor (129) erfaßt wird;
- wobei der variable Längencodierer (9) den Bewegungsvektor (105), den über die Wertigkeit entscheidenden Index, den Mittelwert, den Amplitudenfaktor und den Ausgangsvektorindex codiert, wenn der Schwellwert (128) überschritten wird, jedoch nur den Bewegungsvektor und den über die Wertigkeit entscheidenden Index codiert, wenn der Schwellwert (128) nicht überschritten wird.

2. Videocodierer nach Anspruch 1,
dadurch gekennzeichnet, daß in der Codetabelle (27) für Ausgangsvektoren ein Satz Ausgangsvektoren gespeichert ist, der vorher auf der Basis eines Wahrscheinlichkeitsmodells der Eingangsvektoren erzeugt worden ist.

3. Videocodierer nach Anspruch 1 oder 2,
dadurch gekennzeichnet, daß der adaptive Vektor-Quantisierungsdecodierer (22), an dem der Ausgang (124) des adaptiven Vektor-Quantisierungscodierers (21) anliegt, einen Ausgangsvektor liest, der dem Ausgangsvektorindex der Codetabelle (27) für Ausgangsvektoren entspricht und den gleichen Inhalt wie der des adaptiven Vektor-Quantisierungscodierers (21) hat, den Ausgangsvektor mit dem Amplitudenfaktor multipliziert und den Mittelwert zu dem Produkt addiert, um den vorausberechneten Fehler des vektor-quantisierten Bildsignalblocks zu regenerieren und diesen Fehler auf 0 zu setzen, wenn der über die Wertigkeit entscheidende Index anzeigt, daß der vorausberechnete Fehler des vektor-quantisierten Bildsignalblocks keine Wertung hat.

4. Zwischenrahmen-Prädiktionsvideocodierer mit einer Bewegungs-Detektionsschaltung (222, 253), einer Übertragungseinheit (214) sowie einer DPCM-Schleife, die blockweise (203) eine Bildsignalfolge verarbeitet und einen Subtrahierer (204), einen Quantisierer (206, 238), einen Addierer (210) und einen Rahmenspeicher (212) aufweist, dadurch gekennzeichnet, daß

- der Quantisierer ein Vektor-Quantisierungscodierer ist, der eine Schaltung (217, 247) zur Abtrennung eines Mittelwertes und eine Amplituden-Normierschaltung (218, 248) zur Erzeugung eines Mittelwertes (220, 249, 250, 254), eines Amplitudenfaktors (221, 251, 252, 255) und eines Eingangsvektors (219, 257) aus dem Ausgangssignal (205) des Subtrahierers (204), wobei der Amplitudenfaktor aus der Differenz zwischen dem Ausgangssignal und dem Mittelwert bestimmt wird, sowie eine Bewegungs-Detektionsschaltung (222, 253) aufweist, die auf der Grundlage eines Vergleichs zwischen einem Schwellwert, dem Mittelwert (220, 249, 250) bzw. dem Amplitudenfaktor (221, 251, 252) bestimmt, ob der gerade verarbeitete Bildsignalblock (203) wesentlich gegenüber dem gerade verarbeiteten Rahmen verändert ist und als Ergebnis dieses Vergleichs ein Signal (223, 246) abgibt, welches anzeigt, ob eine Bewegung vorhanden ist oder nicht, und daß ferner eine Schaltung (228) zur Berechnung einer Abweichung sowie ein Detektor (229) für minimale Abweichungen vorgesehen ist, der eine minimale Abweichung zwischen dem Eingangsvektor (219, 257) und einem Ausgangsvektor (227, 261), der aus der Codetabelle (226, 260) für Ausgangsvektoren ausgelesen worden ist, erfaßt;
- ein Schalter (231, 262) vorgesehen ist, an dem der Ausgang des Detektors (229) für minimale Abweichungen in Form eines Meß- bzw. Auswertesignals (230) anliegt, so daß die Adresse (259) der Codetabelle (226, 260) für Ausgangsvektoren in dem Schalter als Ausgangs-Vektorindex gespeichert ist, wenn die minimale Abweichung zwischen dem Ausgangsvektor (227, 261) und dem Eingangsvektor (219, 257) erfaßt wird, und
- die Übertragungseinheit ein Ausgangs-Übertragungspuffer (214) ist, der dem Schalter folgt und das Signal (223, 246), den Mittelwert, den Amplitudenfaktor und den Ausgangs-Vektorindex empfängt und ausgibt, wenn der Schwellwert (215) überschritten wird, jedoch nur das Signal (223, 246) empfängt und ausgibt, wenn der Schwellwert (215) nicht überschritten wird, wobei der Übertragungspuffer (214) zusätzlich ein Steuersignal (215) erzeugt, welches den Schwellwert so beeinflußt, daß der Betrag der Information, die ausgesendet wird, durch den Übertragungspuffer gesteuert wird.

5. Videocodierer nach Anspruch 4,
dadurch gekennzeichnet, daß der Ausgangs-Übertragungspuffer (214) das eine Bewegung anzeigende Signal, den Index des Ausgangsvektors, den Mittelwert und den Amplitudenfaktor zusammen durch variable Längencodierung verarbeitet.

6. Videocodierer nach Anspruch 4 oder 5,
dadurch gekennzeichnet, daß das vorausberechnete Fehlersignal (205), welches von dem Subtrahierer (204) abgegeben wird und das zu dem Subtrahierer (204) geführte gegenwärtige Bildsignal zu der Schaltung (247) für die Abtrennung eines Mittelwertes und der Amplituden-Normierungsschaltung (248) geführt und dort verarbeitet werden;
ein Umschalter (256) zwischen der Amplituden-Normierungsschaltung (248) und der Schaltung (228) zur Berechnung einer Abweichung vorgesehen ist, der mit dem Ausgang der Amplituden-Normierungsschaltung (248) verbunden und durch das Signal (246), welches das Vorhandensein oder Fehler einer Bewegung anzeigt, gesteuert ist, so daß er entweder den durch Mittelwerttrennung und Normierung verarbeiteten vorausberechneten Fehlersignalblock (205) oder den Block des gegenwärtigen Bildsignals (203), welcher in ähnlicher Weise durch Mittelwertabtrennung und Normierung verarbeitet wurde, als Eingangsvektor empfängt; und

in der Codetabelle (260) für Ausgangsvektoren Sätze von Ausgangsvektoren gespeichert sind, die vorausgehend auf der Grundlage der Dichte einer Wahrscheinlichkeitsverteilung von zwei Arten von Eingangsvektoren erzeugt worden sind, so daß die Abweichung zwischen dem Eingangsvektor und dem Ausgangsvektor minimiert ist.

7. Videocodierer nach mindestens einem der Ansprüche 4 bis 6,
gekennzeichnet durch einen Vektor-Quantisierungsdecodierer (239), an dem der Ausgang des Vektor-Quantisierungscodierer (238) anliegt, der einen Ausgangsvektor entsprechend dem Ausgangs-Vektorindex einer Codetabelle für Ausgangsvektoren liest, die den gleichen Inhalt wie die Codetabelle (260) für Ausgangsvektoren des Vektor-Quantisierungscodierer (238) aufweist, den von der Codetabelle (260) für Ausgangsvektoren ausgelesenen Ausgangsvektor mit dem Amplitudenfaktor multipliziert und den Mittelwert zu dem Ergebnis der Multiplikation addiert, um vektorquantisierte decodierte Signale zu erhalten, sowie einen Nullblock (240) ausgibt, wenn das Signal (246) keine Bewegung anzeigt, und

einen Addierer (210), der mit dem Ausgang des Vektor-Quantisierungsdecodierers (239) und über einen durch das Signal (246) gesteuerten Schalter (245) mit dem Ausgang eines Rahmenspeichers (212) verbunden ist, an dessen Eingang der Addiererausgang anliegt, der die reproduzierten Blöcke der Bildsignalfolge bildet, wobei der Schalter (245) den Rahmenspeicher (212) von dem Addierer (210) trennt, wenn das Signal (246) eine Bewegung anzeigt.

# FIG. 1

t

FRAME No. f

R

$S^f(R)$

r

B

A

FRAME No. f-1

R-r

$S^{f-1}(R-r)$

# FIG. 2

$S^{f-1}(R-r)$

$S^f(R)$

$S^f(m-2,n-2)$

$S^{f-1}(m-u,n-v)$

$S^f(m,n)$

$S^f(m+2,n+2)$

# FIG. 3

EP 0 137 314 B1

# FIG. 4

# FIG. 5

# FIG. 6

EP 0 137 314 B1

# FIG. 7

EP 0 137 314 B1

FIG. 8

```
         136    31  ┌──────────────┐   32  ┌──────────────┐   33  ┌──────────────┐
                    │  AMPLITUDE   │       │  MEAN VALUE  │       │ REGENERATIVE │
                ───→│ REGENERATIVE │──────→│  CORRECTION  │──────→│    VECTOR    │──────→
                    │   CIRCUIT    │       │   CIRCUIT    │       │   REGISTER   │
                    └──────────────┘  137  └──────────────┘  138  └──────────────┘   125
                           ↑                      ↑                      ↑
                           └──────────────────────┴──────────────────────┘

          30
   124  ┌──────────────┐   135  ┌──────────────┐  28
        │              │        │  DEVIATION   │
   ────→│ INDEX LATCH  │───────→│ COMPUTATION  │
        │              │        │   CIRCUIT    │
        └──────────────┘        └──────────────┘
```

EP 0 137 314 B1

FIG. 10

# FIG. 9

$S^f_\ell$

| | |
|---|---|
| S(m,n) ○ ○ | S(m+3,n) ○ ○ |
| S(m,n+1) ○ ○ | ○ ○ |
| ○ ○ | ○ ○ |
| S(m,n+3) ○ ○ | S(m+3,n+3) ○ ○ |

$P^f_\ell$

| | |
|---|---|
| P(m,n) ○ ○ | P(m+3,n) ○ ○ |
| ○ ○ | ○ ○ |
| ○ ○ | ○ ○ |
| P(m,n+3) ○ ○ | P(m+3,n+3) ○ ○ |

$\varepsilon^f_\ell$

| | | | |
|---|---|---|---|
| ε1 ○ | ε2 ○ | ε3 ○ | ε4 ○ |
| ε5 ○ | ε6 ○ | ε7 ○ | ε8 ○ |
| ε9 ○ | ε10 ○ | ε11 ○ | ε12 ○ |
| ε13 ○ | ε14 ○ | ε15 ○ | ε16 ○ |

# FIG. 11

HOLIZONTAL DIRECTION →

VERTICAL DIRECTION ↓

VECTOR QUANTIZATION REGION AT TIME t →

MOVEMENT COMPENSATION REGION AT TIME t →

√R̄ LINES

2V LINES

# FIG.12

```
201 →  202
       ┌─────────────┐      204
       │ R/B SCAN    │      ( - )      206                    208                   214
       │ CONVERTER   │────→ (+/-)  ┌──────────────┐    ┌──────────────┐    ┌──────────────┐
       └─────────────┘      205    │ VECTOR       │    │ VECTOR       │    │ TRANSMISSION │──→ 216
          203                      │ QUANTIZATION │───→│ QUANTIZATION │───→│ BUFFER       │
                                   │ ENCODER      │    │ DECODER      │    └──────────────┘
                                   └──────────────┘    └──────────────┘
                                        207
                                                        209 (+) 210
                                              213
                                   ┌──────────────┐     211
                                   │ FRAME        │
                                   │ MEMORY       │
                                   └──────────────┘
                                      212
```

# FIG.13

```
205 →  217                 218              219   228                  229
       ┌──────────────┐    ┌──────────────┐     ┌──────────────┐    ┌──────────────┐
       │ MEAN VALUE   │    │ AMPLITUDE    │     │ DEVIATION    │    │ MINIMUM      │
       │ SEPARATION   │───→│ NORMALIZATION│────→│ COMPUTATION  │───→│ DEVIATION    │
       │ CIRCUIT      │    │ CIRCUIT      │     │ CIRCUIT      │    │ DETECTING    │
       └──────────────┘    └──────────────┘     └──────────────┘    │ CIRCUIT      │── 230
215 ─┤                                                              └──────────────┘

        222                226              227      224                231
       ┌──────────────┐    ┌──────────────┐    ┌──────────────┐    ┌──────────────┐
       │ MOVEMENT     │    │ OUTPUT       │    │ CODE TABLE   │    │ TRANS-       │
       │ DETECTING    │    │ VECTOR       │←───│ ADDRESS      │───→│ MISSION      │──→
       │ CIRCUIT      │    │ CODE TABLE   │    │ COUNTER      │    │ LATCH        │── 207
       └──────────────┘    └──────────────┘    └──────────────┘    └──────────────┘
          223     221                220
```

EP 0 137 314 B1

# FIG.14

| 207 | 232 RECEPTION BUFFER | 225 | 226 OUTPUT VECTOR CODE TABLE | 227 | 233 AMPLITUDE REGENERATING CIRCUIT | 234 MEAN VALUE REGENERATING CIRCUIT | 209 |

221

220

# FIG.15

| 216 | 235 RECEPTION BUFFER | 207 | 208 VECTOR QUANTIZATION DECODER | 209 | 210 | 211 | 236 B/R SCAN CONVERTER | 237 |

212 FRAME MEMORY

213

EP 0 137 314 B1

FIG.16

TIME

FRAME No. f-1

Sf-1

FRAME No. f

Sf

S1 S2

S3 S4

EP 0 137 314 B1

**FIG. 17**

201 → 202 203 R/B SCAN CONVERTER

204 +/− 205

238 207

VECTOR QUANTIZATION ENCODER — 246

VECTOR QUANTIZATION DECODER — 240 239

TRANSMISSION BUFFER 214 → 216 215

245

210 +

244 242 212 241

LOW-PASS FILTER 243

FRAME MEMORY

**FIG. 18**

203 247 MEAN VALUE SEPARATION CIRCUIT

205 249 253 251

248 AMPLITUDE NORMALIZATION CIRCUIT

256 257 CHANGE-OVER SWITCH

228 DEVIATION COMPUTATION CIRCUIT

229 MINIMUM DEVIATION DETECTING CIRCUIT 230

250 MOVEMENT DETECTING CIRCUIT 252

215 255

260 OUTPUT VECTOR CODE TABLE 254

261 258 CODE TABLE ADDRESS COUNTER 259

259 LATCH 262

207 246

EP 0 137 314 B1

# FIG. 19

Reception Latch (263, 259) → Output Vector Code Table (260, 261) → Amplitude Regenerating Circuit (233) → Mean Value Regenerating Circuit (234) → 240; inputs 207; lines 254, 255, 246.

# FIG. 20

Reception Buffer (235) → Vector Quantization Decoder (239) → 207, 240, 210 (adder, 241) → B/R Scan Converter (236) → 237; Low-Pass Filter (243) → Frame Memory (212, 242); switch 244, 245; input 216; line 246.

33